Europäisches Patentamt

European Patent Office

Office européen des brevets

(19)

(11) **EP 0 562 398 B1**

(12) **EUROPÄISCHE PATENTSCHRIFT**

(45) Veröffentlichungstag und Bekanntmachung des Hinweises auf die Patenterteilung:
**26.06.1996  Patentblatt 1996/26**

(51) Int Cl.⁶: **F04B 15/02**, F04B 49/06, F04B 9/10, G01F 11/02, F04B 13/00

(21) Anmeldenummer: **93104125.5**

(22) Anmeldetag: **13.03.1993**

(54) **Dickstoffpumpe**

Pump for viscous material

Pompe pour matières épaisses

(84) Benannte Vertragsstaaten:
**AT BE CH DE ES FR GB GR IT LI LU NL PT SE**

(30) Priorität: **21.03.1992  DE 4209256**

(43) Veröffentlichungstag der Anmeldung:
**29.09.1993  Patentblatt 1993/39**

(73) Patentinhaber: **Schwing GmbH**
**D-44653 Herne (DE)**

(72) Erfinder: **Fehn, Berthold**
**W-4150 Krefeld (DE)**

(74) Vertreter:
**Herrmann-Trentepohl, Werner, Dipl.-Ing. et al**
**Schaeferstrasse 18**
**44623 Herne (DE)**

(56) Entgegenhaltungen:
**EP-A- 0 226 908**          **WO-A-85/01993**
**WO-A-91/08445**          **DE-A- 3 635 723**
**DE-A- 4 035 518**          **FR-A- 2 537 274**
**US-A- 3 494 290**          **US-A- 5 106 272**

## Beschreibung

## "VIP-SYSTEM"

Die Erfindung bezieht sich auf die Förderung eines Steifpastösen Materials. Insbesondere betrifft die Erfindung ein Dickstofftransportsystem, in dem eine Dickstoffverdrängerpumpe den Dickstoff durch eine Rohrleitung fördert, wobei die in der Zeiteinheit geförderte Menge und das insgesamt geförderte Material automatisch bestimmt werden.

Derartige Dickstoffpumpen sind bekannt, seit sie zunehmende Verbreitung für die Förderung von Dickstoffen durch eine Rohrleitung im komunalen und industriellen Anwendungsbereich gefunden haben. Dickstoffpumpen bieten eine Reihe von entscheidenden Vorteilen gegenüber Schnecken- oder Gurtförderern. Das Pumpen von Schlamm durch eine Rohrleitung bedeutet den Einschluß von Gerüchen und damit einen sicheren und gefahrlosen Arbeitsplatz. Dickstoffpumpen eignen sich zur Förderung von dicken, schweren Schlämmen, für die praktisch Gurt- oder Schneckenförderer nicht in Betracht kommen. Das ist insbesondere von Bedeutung, wenn die Dickstoffe getrocknet und in einer verbrennungsanlage verbrannt werden sollen. Die Rohrleitung hat nur einen geringen oder keinen Verschleiß; ihre Unterhaltung ist im Vergleich mit Schnekken- oder Gurtförderern wesentlich billiger. Pumpe und Rohrleitung nehmen weniger Raum ein und können das Material durch Richtungsänderungen mit einfachen Krümmern fördern. Dickstoffpumpen bieten außerdem eine Verminderung des Lärms gegenüber dem, was mechanische Förderer abstrahlen und arbeiten auch sauberer und ohne Verschmutzungen.

Zur Sicherung eines möglichst kontinuierlichen Förderflusses sind weiterhin Dickstoffförderpumpen mit von Überwachungseinrichtungen gestenerten Ventilen bekannt. So wird z.B. in US-3 494 290 eine Betonpumpe mit einem Überwachungssystem zur Erhöhung der Kontinuität des Förderflusses beschrieben.

Einerseits reglementieren zahlreiche überörtliche Gesetze und Verordnungen die Verarbeitung und die Ablagerung von Dickstoffen und fordern, daß der Verarbeiter die Menge des verarbeiteten Materials genau bestimmt und festhält.

Andererseits wird, da zunehmend solche Pumpen in komplexen Anlagen eingesetzt werden, höchste Verfügbarkeit gefordert. Dazu gehören beispielsweise Schlammverbrennungsanlagen, Kohlekraftwerke und bestimmte Funktionsprozesse. Hierbei bilden die Dickstoffpumpen einen Teil der Anlage, der häufig für einen komplexen Dickstofffluß zuständig ist, welcher aus der Dickstoffzuführung, dem Einspeisen des Dickstoffes in die Dickstoffpumpe, sowie ggf. der Dickstoffförderung und-dosierung an eine bestimmte Stelle der Anlage besteht. In solchen und ähnlichen Einsatzfällen wird in der Regel gefordert, daß die Wartung und Instandhaltung der maßgeblichen Baugruppen dieser Teile der Anlage im voraus geplant und durchgeführt werden können, um so unerwartete Ausfälle zu verhindern. Diese Forderungen sind von besonderer Bedeutung, wenn Standby-Pumpenanlagen z.B. wegen zu hoher Kosten nicht in Betracht gezogen werden können, so daß bereits sich anbahnende Verschleißsymptome rechtzeitig erkannt werden müssen.

Es ist die Aufgabe der Erfindung ein System zu schaffen, welches ermöglicht, durch kontinuierliche Ermittlung der in der Zeiteinheit effektiv geförderten Dickstoffmenge und somit im Vergleich zur theoretischen Dickstofffördermenge auch des volumetrischen Füllungsgrades der Pumpe, sowie durch ständige Funktionsüberwachung sich anbahnende Funktionsfehler oder einsetzenden Verschleiß zu erkennen und zu melden.

Das geschieht erfindungsgemäß im wesentlichen durch eine Verknüpfung von Indikatoren des hydrostatischen Pumpenantriebes und der Steuerelemente mit Parametern der Dickstoffpumpe, die von dem Arbeitsspiel des Förderkolbens im Förderzylinder abgeleitet sind. In dem man nämlich die Schaltfunktionen des hydrostatischen Antriebes mit den Kolbenarbeitsspielen vergleicht, kann man aus Sollwerten und Istwerten Abweichungen bestimmen, die, wenn sie ein bestimmtes Maß über- oder unterschreiten, Fehlfunktionen ankündigen oder bereits identifizieren.

Dies gilt gleichermaßen für Einzylinder- und Mehrzylinder-Pumpen mit der Besonderheit, daß bei Zweizylinder-Dickstoffpumpen aus dem Zusammenspiel der Förderpumpe mit ihrem hydraulischen Antriebsaggregat ständig Vergleiche gezogen werden können zwischen jeweils aufeinanderfolgenden gleichartigen Arbeitszyklen der beiden Zylindereinheiten.

Durch die Erfindung werden auch eine sinnvolle Analyse der einzelnen Arbeitsschritte innerhalb eines oder mehrerer aufeinanderfolgender Arbeitszyklen der jeweils betrachteten Zylindereinheit und bei Zweizylinderpumpen außerdem auch ein Vergleich mit dem betreffenden Arbeitsschritt eines anderen gleichartigen Zylinders mit Hilfe von Messungen und Auswertungen von Abweichungen zwischen den vorgegebenen Arbeitsschritten und/oder festen, vorgegebenen Werten Rückschlüsse möglich, die die sich anbahnenden oder bereits eingetretenen Verschleißerscheinungen anzeigen, und welche dann weiter gemeldet werden können.

Als Indikatoren bzw. Parameter stehen zur Verfügung Drücke, Positionsmeldungen von Förderkolbenendstellungen, Öffnungs- und Schließstellungen der Ventile sowie die Schaltendstellungen der Hydrauliksteuerventile als auch Stellungen des Mengenreglers der Hydraulikpumpe und die Zeitintervalle zwischen den einzelnen Meßpunkten der Indikatoren und Parameter.

Da es die Aufgabe einer Pumpe ist, eine bestimmte geforderte Menge Dickstoff zu transportieren, erscheint es sehr wichtig, kontinuierlich für jeden Hub den Füllungsgrad zu bestimmen und seine Konstanz im Rahmen einer zulässigen Toleranz fortlaufend zu überwachen.

Nahezu alle denkbaren Störungen wie Verschleiß, Defekte, Ventilschaltfehlfunktionen, Verstellung von Reglern etc. haben direkten nachteiligen Einfluß auf den Gesamtdurchsatz der Pumpe und dabei vielfach primär auch auf den Füllungsgrad.

Systeme zur Füllungsgradbestimmung sind an sich bekannt, unter anderem auch durch eine auf die Anmelderin zurückführende US-Patentanmeldung Serial-No. 07/595457 (US-A-5 106 272). Es soll hier wegen der Verknüpfung mit anderen Parametern und Indikatoren der Vollständigkeit halber noch einmal kurz erläutert werden.

Der Füllungsgrad oder auch volumetrische Wirkungsgrad ergibt sich daraus, daß es normalerweise bei Verdrängerpumpen nicht möglich ist, die Zylinder zu 100 % ihres bekannten Rauminhaltes zu füllen.

Bei pastösen oder stichfesten Schlämmen oder Filterkuchen entsteht nämlich infolge des oft nur geringen Vordruckes auf der Saugseite ein während des Saughubes größer werdender Abstand zwischen dem saugenden Kolben und der von ihm angesaugten Schlammsäule. Dieser Abstand wird um so größer, je höher der Fließwiderstand im zu füllenden Förderzylinder ist und je mehr Gaseinschlüsse im Schlamm enthalten sind.

Mit anderen Worten, der saugende Förderkolben eilt der Schlammsäule voraus und erzeugt so zwischen sich und der Schlammsäule ein mehr oder weniger großes Leervolumen, in welchem Unterdruck herrscht, aber kein Schlamm vorhanden ist.

Deshalb erfolgt auf einem Teil jedes Förderhubes der Pumpe lediglich eine Eliminierung des entstandenen Leerraumes sowie eine Verdichtung des Dickstoffes im Zylinder, bevor der Druck des Kolbens den am Auslaß der Pumpe herrschenden Druck überwindet und das Material aus den Zylinder in die Rohrleitung fördert. Daher wird erfindungsgemäß wenigstens ein Betriebsparameter der Pumpe gemessen, um den Punkt während des Pumphubes zu bestimmen, an dem der hydraulische Druck auf den Kolben ausreicht, um den Auslaßdruck zu überwinden und der Dickstoff aus dem Zylinder austritt. Mit dieser Information wird das tatsächliche Volumen bestimmt, das während des Pumphubes gefördert wird. In dem man die während jedes Hubes gepumpten Volumina addiert, ergibt sich eine Volumensumme. Wenn man das tatsächlich gepumpte Volumen während eines Arbeitsspieles durch die hierfür erforderliche Zeit dividiert, läßt sich hieraus eine während eines bestimmten Zeitraumes gepumpte Menge bestimmen.

In einer bekannten Ausführungsform weist die Pumpe ein Auslaßventil zwischen dem Zylinder und dem Auslaß auf, das öffnet, wenn der Druck im Zylinder den Druck am Auslaß erreicht hat. Das Öffnen des Auslaßventiles wird gemessen und der Zeitraum vom Öffnen des Auslaßventiles bis zum Ende des Pumpenhubes wird bestimmt. Der gemessene Zeitraum wird mit dem gesamten Zeitraum vom Beginn bis zum Ende des Pumpenhubes verglichen. Das Ergebnis ist der Füllungsgrad in Prozent des Gesamtvolumens des Zylinders während jedes Pumpenhubes.

Eine weitere Ausführungsform der Erfindung verwendet ebenfalls eine Pumpe mit einem Auslaßventil, das dann öffnet, wenn der Druck im Zylinder den Druck am Pumpenauslaß erreicht hat. Ein Endschalter mißt die Stellung des Kolbens am Zylinder in dem Moment, wenn das Auslaßventil öffnet. Dies stellt eine Information über das Volumen dar, das während eines gegebenen Pumpenhubes gefördert wird.

In einer weiteren Ausführungsform ist das Auslaßventil der Pumpe während des gesamten Pumpenhubes geöffnet und der hydraulische Druck, der den Kolben antreibt, wird im Vergleich zum Auslaßdruck gemessen und entweder die Zeit oder die Kolbenstellung im Pumpenhub bestimmt, wenn der hydraulische Druck den vorgegebenen Auslaßdruck erreicht. Dies kann dazu dienen, einen Füllungsgrad oder ein Volumen zu bestimmen, welches während jedes Pumpenhubes gefördert wird.

In einer weiteren Ausführungsform wird die Funktion des hydraulischen Druckes analysiert, um den Zeitpunkt zu bestimmen, an dem die Steigerungsrate des hydraulischen Druckverlaufs sich dem Wert 0 nähert. Dies zeigt, daß der Hydraulische Druck soweit angestiegen ist, daß er dem Druck in der Förderleitung entspricht und der Dickstoff aus dem Zylinder herausgepumpt wird. In dem man entweder die lineare Stellung des Kolbens oder die relative Zeit bestimmt, bei der die Drucksteigerungsrate 0 wird und dies auf Beginn und Ende des Pumpenhubes bezieht, wird der Füllungsgrad des Zylinders und damit das gepumpte Volumen während jedes Pumpenhubes bestimmt.

Die vorgenannten Ausführungen gestatten es, erfindungsgemäß eine genaue Messung der jeweiligen Pumpmenge, der addierten Pumpenvolumina und des Pumpenwirkungsgrades vorzunehmen.

Die erfindungsgemäße Bedeutung der Erfassung und Überwachung weiterer Indikatoren und Parameter ergibt sich aus folgendem:

Für die Funktion der erfindungsgemäßen Pumpe, d.h. für den folgerichtigen Ablauf der Umschaltung der Pumpenventile bzw. des Pumpenschiebers über hydraulische Ventil- und Schieberantriebe sowie das Umschalten der Förderkolbenantriebe sind die Drosselventile im hydraulischen Schaltkreis des Pumpenantriebes von entscheidender Bedeutung. Hierauf stellen die Merkmale des Anspruchs (12) ab.

Desweiteren wird die zeitliche Folge der Umstellung der Pumpenventile mit den Kolben in den Förderzylindern korreliert. Das kann mit den Merkmalen des Anspruches (15) erfolgen. Hierbei wird nämlich die Öffnungsweite der Drosselventile derart überwacht, daß die Drosselventile weder zu weit geöffnet noch zu weit geschlossen werden. Dadurch wird erreicht, daß das offene Druck- bzw. Saugventil schließt, bevor die Bewegungsrichtung der Förderkolben umgeschaltet wird.

Als weiterer Indikator kommt der hydraulische Druck im hydrostatischen Pumpenantrieb infrage, was Gegenstand des Anspruches (13) ist. Danach wird dieser Druck mit dem Förderdruck der Dickstofförderung in Beziehung gesetzt. Damit läßt sich genau bestimmen, ob die meistens als Tellerventile ausgeführten Pumpenventile richtig funktionieren oder ob sie Verschleißerscheinungen zeigen.

Ferner bietet die Erfindung die Möglichkeit, die im Anspruch (14) realisiert ist. Hierbei werden nicht nur die Funktionen der Dickstoffpumpe, sondern auch die Funktionen des hydrostatischen Antriebes überwacht und etwaige Fehler angezeigt. Damit besteht die Möglichkeit, eine jeweilige Fehlfunktion danach zu bestimmen, ob sie in den für die Förderung zuständigen Baugruppen der Pumpe oder in deren hydraulischem Antrieb liegen. Die richtige Funktion der Dickstoffpumpe hängt aber nicht allein von dem korrekten Arbeiten der für die Dickstofförderung erforderlichen Baugruppen und ihres hydrostatischen Antriebes ab. Die meistens gewünschte gleichförmige Förderung bestimmt sich auch wesentlich nach dem Funktionieren der Dickstoffzuführung zur Pumpe. Davon hängt nämlich die richtige Förderzylinderfüllung ab. Dies kann mit den Merkmalen des Anspruches (16) kontrolliert und ggf. angezeigt werden. Das geschieht im wesentlichen über die Bestimmung entwaiger Differenzen der volumetrischen Wirkungsgrade der Förderung und aus deren Abweichungen von vorgegebenen Grenzwerten.

Andererseits ist die richtige Funktion der Dickstoffpumpe nicht allein vom hydrostatischen Antrieb ihrer Baugruppe abhängig. Fehler können auch dadurch entstehen, daß im hydrostatischen Antrieb Energieverluste auftreten. Die Überwachung der Dickstoffpumpe auf solche Fehler ist im Anspruch (17) wiedergegeben. Hierbei werden Leckölmengen, etwa der Hydräulikpumpe, der Steuerventile oder der Verbraucher, bestimmt, die Fehlfunktionen anzeigen, sobald sie ein bestimmtes Maß überschreiten.

Diese Leckölmengen sind von größerer Bedeutung als die Drücke, die man messen kann. Mit den Merkmalen des Anspruches (18) wird es zwar möglich, eine grobe Bestimmung dahingehend vorzunehmen, ob die hydraulischen Steuerventile und die Teller/Pumpenventile ihre vorgegebenen Endstellungen erreichen, und damit festzustellen, ob an diesen Stellen Fehler auftreten. Eine solche Anzeige kann aber unterdrückt werden, wenn gleichzeitig der Hydraulikantrieb gestört ist, weil die Leckölmengen zu groß werden. Eine solche Kombination ist Gegenstand des Anspruches (19).

Das einwandfreie Funktionieren des hydrostatischen Antriebes der Dickstoffpumpe setzt natürlich voraus, daß der Druckerzeuger richtig funktioniert. Daher sieht eine Ausführungsform der Erfindung, die Gegenstand des Anspruches (20) ist, vor, auch den Druckerzeuger zu überwachen. Dies geschieht dadurch, daß die vorgegebenen Zeiten des Kolbenspiels im Förderzylinder mit den tatsächlichen Werten verglichen werden.

Die Einzelheiten, weitere Merkmale und andere Vorteile der Erfindung ergeben sich aus der nachfolgenden Beschreibung von Ausführungsformen der Erfindung anhand der Figuren in den Zeichnungen. Vorzugsweise werden zweizylinder-Kolbenpumpen dargestellt, worauf sich auch die folgende detailierte Beschreibung bezieht. Es zeigen:

Figur 1      In perspektivischer und abgebrochener Darstellung und unter Weglassung bestimmter Teile ein zweizylinder-Dickstoffpumpen-System, daß Einlaß- und Auslaßtellerventile verwendet,

Figur 2      eine perspektivische und teilweise abgebrochene Darstellung eines Teiles der Zweizylinder-Dickstoffpumpe, welche einen schwenkenden Schieber aufweist,

Figur 3      eine grafische Darstellung des hydraulischen Druckes als Funktion der Zeit in einer Zweizylinder-Dickstoffpumpe gemäß der Darstellung der Figur 1,

Figur 4-7    Blockdiagramme verschiedener Anzeigesysteme zur Bestimmung der einzelnen und der gesamten Volumina des von der Pumpe geförderten Dickstoffes,

Figur 8      Einen hydraulischen Schaltplan für die Steuerung der Dickstoffpumpe nach Figuren 1 und 2.

Figur 9      Ein Zeitablaufdiagramm, welches auf der Abszisse die Zeit und auf der Ordinate den Druck des Dickstoffes über den Funktionen der Drossel- und Steuerventile wiedergibt

Figur 10     Ein Zeitablaufdiagramm, welches auf der Abszisse die Zeit und auf der Ordinate den hydraulischen Druck des hydraulischen Antriebes einer mit Tellerventilen gesteuerten Dickstoffpumpe zeigt,

Figur 11     Zum Vergleich eine der Figur 9 entsprechende Darstellung des Mediumdruckverlaufes über die Zeit bei einer schiebergesteuerten Zweizylinderdickstoffpumpe,

Figur 12     Einen Balkenplan zum Diagramm nach Figur 9 und

Figur 13     Ein Blockdiagramm zur Fehleranalyse und - anzeige.

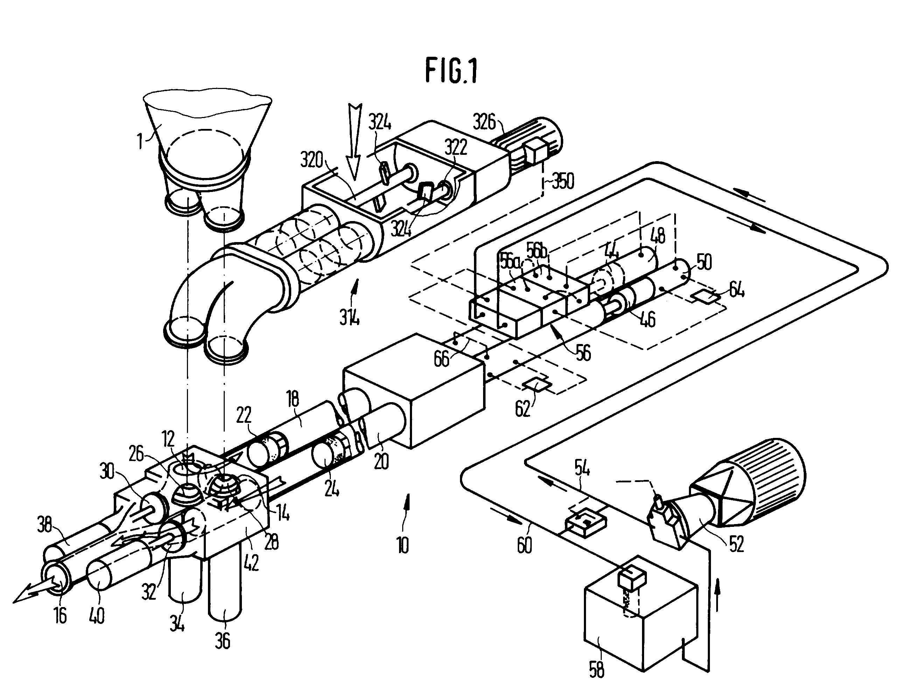

Figur 1 zeigt eine Zweizylinderdickstoffpumpe (10) mit hydraulischem Antrieb. Ein entweder in einem Trichter (1) vorgehaltener oder über einen Stetigförderer (314) herangeführter stark feststoffhaltiger Schlamm passiert die Einlässe (12,14) und wird durch den Auslaß (16) in eine nicht dargestellte Rohrleitung gepumpt. Die Pumpe (10) weist zwei starre Zylinder (18,20) auf, in denen sich jeweils feste Kolben (22,24) hin- und herbewegen. Ein Einlaßtellerventil (26) steuert den Zufluß des Dickstoffes vom Einlaß (12) in den Zylinder (18). In ähnlicher Weise steuert das Tellerventil (28) den Fluß des Dickstoffes vom Einlaß (14) in den Zylinder (20). Der Durchfluß des Dickstoffes von den Zylindern (18,20) zum Auslaß (16) wird von Tellerventilen (30,32) gesteuert.

Die Einlaßtellerventile (26,28) werden mit hydraulischen Einlaßtellerventil antriebszylindern (34, 36) gesteuert. Die Auslaßtellerventile (30,32) werden von hydraulischen Auslaßtellerventilantriebszylindern (38,40) betätigt.

In der in Figur 1 wiedergegebenen Stellung sind das Einlaßtellerventil (26) und das Auslaßtellerventil (32) geöffnet. Deshalb entfernt sich der Kolben (22) vom Tellerventilgehäuse (42), während der Kolben (24) in Richtung auf das Tellerventilgehäuse (42) läuft. Dickstoff wird durch den Einlaß (12) in den Zylinder (18) gesaugt, während Dickstoff vom Zylinder (20) in den Auslaß (16) gepumpt wird.

Die Förderkolben (22, 24) sind an die hydraulisch betätigten Antriebskolben (44, 46) angeschlossen, die sich in den hydraulischen Zylindern (48, 50) bewegen. Das Hydraulikmedium wird von einer hyraulischen Pumpe (52) durch die Hochdruckleitung (54) zum Steuerventilblock (56) gefördert. In dem Steuerventilblock (56) sind zwei Steuerschieber (56a, 56b) angeordnet, die die Abfolge des hydraulischen Hoch- und Niederdruckes an den hydraulischen Zylindern (48, 50) und an den Tellerventilantriebszylindern (34, 36, 38, 40) steuern. Der Niederdruck des hydraulischen Mediums fließt vom Ventilblock (56) durch die Niederdruckleitung (60) zurück.

Vordere- und rückwärtige Schaltventile (62,64) signalisieren die Position des Kolbens (46) am vorderen und rückwärtigen Ende des Kolbenweges und sind mit dem Steuerventil 56a verbunden. Jedesmal, wenn der Kolben (46) das vordere oder das rückwärtige Ende seines Weges im Zylinder (50) erreicht, wird eine Ventilsequenz eingeleitet, welche alle 4 Tellerventile so beaufschlagt, um von der innehabenden Position zur entgegengesetzten zu wechseln und die Beaufschlagung der Zylinder (48,50) zur Hoch- und Niederdruckverbindung wechselt, und wobei zunächst nur die Ventile, die geöffnet waren, schließen, so daß ein Zwischenzustand entsteht, bei dem alle 4 Ventile geschlossen sind, und die Ventile, die geschlossen waren, erst öffnen, wenn sich die Druckverhältnisse an den Förderkolben mit Beginn des neuen Pumpzyklus entsprechend ändern. (Entlastung für das zuvor geschlossene Saugventil und Belastung für das zuvor geschlossene Druckventil.)

Die Abfolge der Arbeitsvorgänge in der Pumpe (10) ist im Wesentlichen die folgende:

Wie in Figur 1 dargestellt, fördert der Zylinder (20) seinen Dickstoff in Auslaß (16), während Zylinder (18) seinen Dickstoff aus dem Einlaß (12) ansaugt. Am Ende des Pumpenhubes steht der Förderkolben (24) in unmittelbarer Nähe des Tellerventilgehäuses (42), während der Kolben (22) seinen am weitesten von Ventilgehäuse (42) entfernten Punkt erreicht hat.

An diesem Punkt erhält das Ventil (62) das Signal, daß der hydraulische Antriebskolben (46) das vorwärtige Ende eines Kolbenweges erreicht hat. Der Ventilschieber (56a) wird geschaltet, so daß alle Tellerventilantriebszylinder beaufschlagt werden, wobei, wie oben gesagt, aufgrund der herrschenden Druckverhältnisse zunächst nur die Ventilantriebszylinder (34,40) betätigt werden. Dadurch werden das Einlaßtellerventil (26) und das Auslaßtellerventil (32) geschlossen und so der Zustand erreicht, bei dem alle vier Tellerventile geschlossen sind.

An diesem Punkt befinden sich die Kolben (22,24) am Ende Ihres Kolbenweges und somit am Punkt der Umkehr ihrer Bewegungsrichtung.

Alle vier Tellerventile (26,28,30,32) sind geschlossen. Mit Beginn des neuen Hubes steigt der hydraulische Druck im Zylinder (48) an und treibt den Kolben (44) nach vorn. Dadurch bewegt sich der Kolben (22) in Richtung auf das Ventilgehäuse (42). Der Kolben (22) ist nunmehr in seinem Pump- oder Förderhub umgeschaltet. Zur gleichen Zeit wird der vor dem Kolben (44) herrschende hydraulische Druck vom Zylinder (48) durch die Verbindungsleitung (66) zur vorderen Seite des Zylinders (50) geleitet. Dadurch gelangt hydraulischer Druck auf die Vorderseite des Kolbens (46) und bewegt diesen rückwärts. Im Ergebnis beginnt der Kolben (24) sich vom Gehäuse (42) zu entfernen und führt seinen Ansaughub aus.

Wenn die Wirkung des Öffnungsdruckes am Antriebszylinder (36) für das Einlaßventil (28) am Einlaß (14) die Wirkung des Druckes im Zylinder (20) erreicht, öffnet das Einlaßventil (28) und läßt den Dickstoff durch den Einlaß (14) in den Zylinder (20) während des Ansaughubes fließen.

Wenn der Kolben (22) sich nach vorn bewegt, eliminiert er zunächst den entstandenen Leerraum und verdichtet anschließend den Dickstoff im Zylinder (18). Im dem Augenblick, in dem der komprimierte Dickstoff im Pumpzylinder den gleichen Druck aufweist, wie der komprimierte Dickstoff in der Förderleitung beim Auslaß (16), öffnet das Tellerventil (30). Da das Tellerventil des fördernden Zylinders erst öffnet, wenn der Zylinderinhalt den gleichen Druck wie in der Fördeleitung aufweist, kann kein Material zurückfließen.

Die Arbeitsweise, bei der der Kolben (22) nach vorn und der Kolben (24) nach rückwärts läuft, setzt sich fort, bis die Kolben jeweils das Ende ihres Kolbenweges erreichen. An diesem Punkt veranlaßt das Schaltventil (64) die Druckbeaufschlagung aller 4 Ventilantriebszylinder mit der analogen Folge wie zuvor für die Schaltung des Ventils (62) beschrieben.

Bei fortgesetztem Pumpenbetrieb arbeitet einer der Förderkolben (22, 24) im Saughub, während der andere im Druck- oder Förderhub arbeitet.

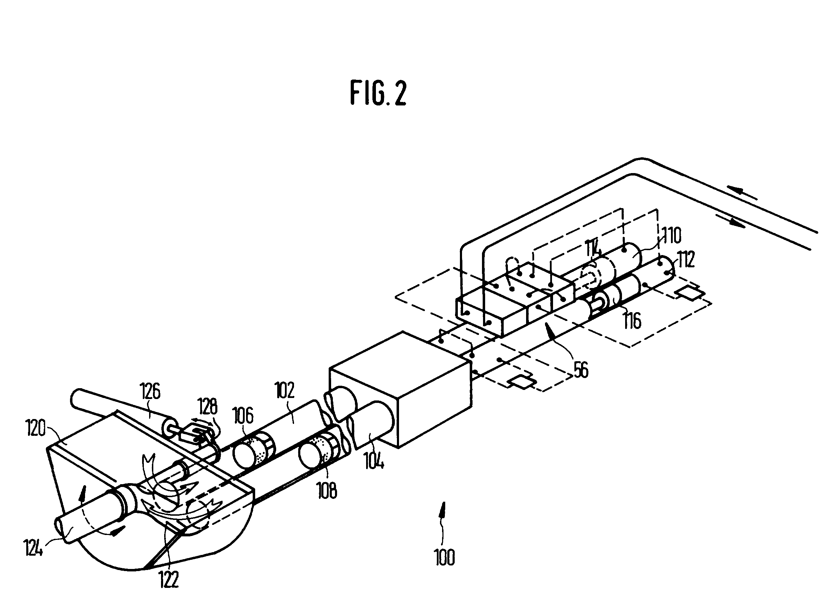

Die Figur 2 zeigt in perspektivischer Ansicht eine Zweizylinder-Dickstoffpumpe (100) mit einem Schwenkrohrschieber (122) (Rohrweiche) im Gegensatz zu der Tellerventilanordnung nach Figur 1. Die Pumpe (100) weist zwei Zylinder (102, 104) auf, in denen Förderkolben (106, 108) wechselweise hin und her laufen. Hydraulische Antriebszylinder (110, 112) mit Antriebskolben (114, 116) sind an die Förderkolben (106, 108) angeschlossen. Die Ventilanordnung (56) steuert die Aufeinanderfolge der Bewegungen der Kolben (114, 116) der Hydraulik-Antriebszylinder und dadurch die Bewegung der Kolben (106, 108) in den Förderzylindern (102, 104).

Der Dickstoff wird einem Vorratsbehälter (120) aufgegeben, in dem ein Schwenkrohrschieber (122) untergebracht ist. Der Schwenkrohrschieber (122) verbindet den Auslaß (124) mit dem einen oder anderen der beiden Förderzylinder (in Figur 2 ist dargestellt die Verbindung des Auslasses (124) mit dem Förderzylinder (104)), während der andere Förderzylinder (in diesem Fall der Zylinder (102)) in das Innere des Fülltrichters (120) geöffnet ist. In Figur 2 bewegt sich der Kolben (108) während seines Förderhubes.nach vorn und pumpt den Dickstoff aus den Zylinder (104) in den Auslaß (124), während der Kolben (106) sich rückwärts bewegt und Dickstoff in den Zylinder (102) saugt.

Am Ende des Hubes bewirkt der hydraulische Antrieb (126), der mit der Schwinge (128) verbunden ist, die Schwenkbewegung des Schwenkrohrschiebers (122), so daß nunmehr der Auslaß (124) an den Zylinder (102) angeschlossen ist. Die Bewegungsrichtung der Kolben (106, 108) wechselt, so daß sich der Kolben (106) nach vorn, während eines Pumpenhubes, bewegt, während der Kolben (108) nach hinten über seinen Ansaug- und Füllweg läuft.

Hydraulisches Medium zum antrieb der Zylinder und der Steuerung der Pumpe (100) wird von einer hydraulischen Pumpe und einem Antriebsaggregat (das in Figur 2 nicht dargestellt ist) erzeugt und entspricht der Pumpe (52) und dem Antriebsagggregat (52, 54, 58) nach Figur 1.

Der wesentliche Unterschied zwischen der Pumpe (100) nach Figur 2 und der Pumpe (10) nach Figur 1 liegt in der Ventilanordnung. Bei der Pumpe (100) ist nämlich jeweils einer der beiden Zylinder (102, 104) an den Auslaß (124) während des gesamten Pump- bzw. Druckhubes angeschlossen. Im Gegensatz dazu öffnen bei der Pumpe (10) die Auslaßventile (30, 32) erst, sobald das Material im Zylinder bis zu einer Druckhöhe komprimiert ist, bei der der Auslaßdruck und der Druck des Materials im Förderzylinder gleich sind. Wie später erläutert wird, kann das System gemäß der Erfindung sowohl für die Pumpe (10) wie auch für die Pumpe (100) verwendet werden, wobei einige Unterschiede in den Parametern, die gemessen werden müssen, die Unterschiede in der Wirkungsweise der beiden Ventilanordnungen berücksichtigen.

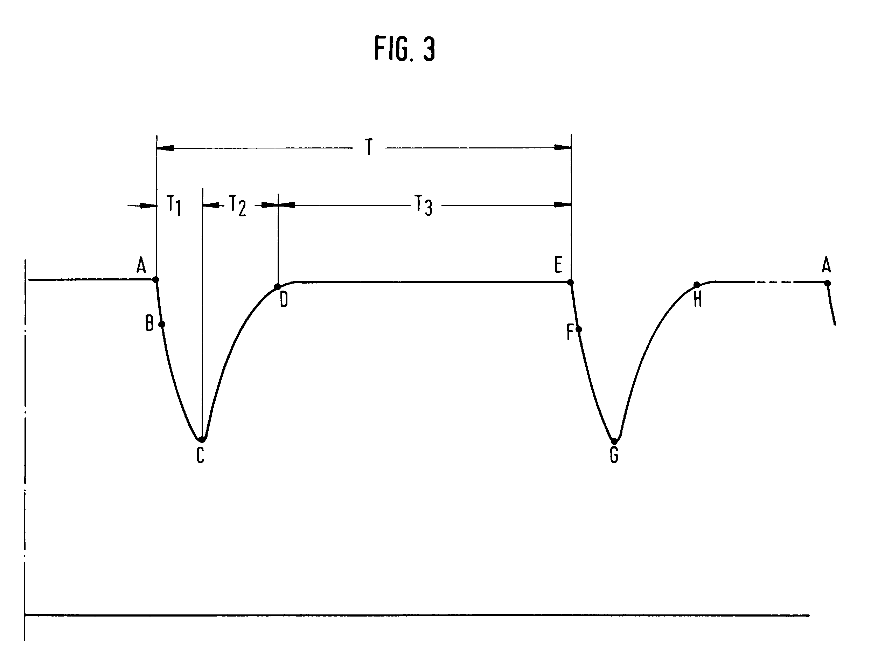

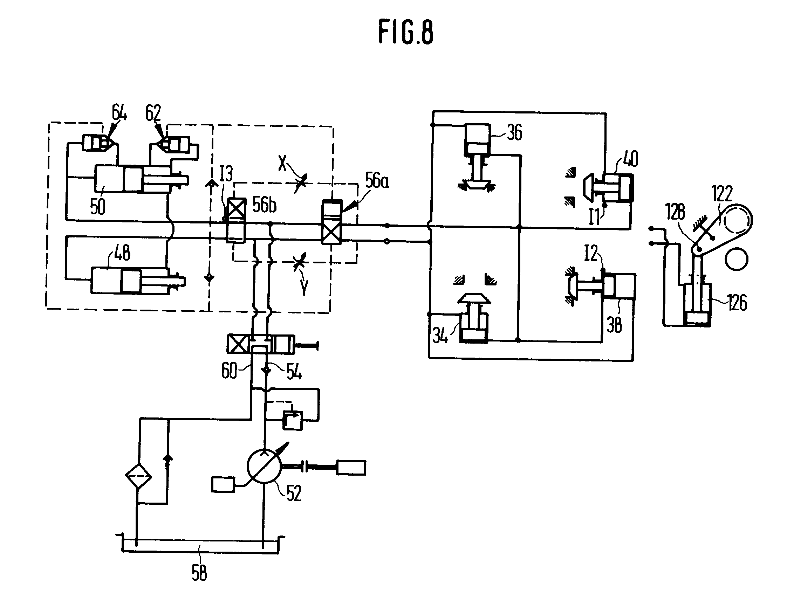

Figur 3 stellt grafisch den Förderdruck als Funktion der Zeit in einer Zweizylinder-Dickstoffpumpe, der in Figur 1 dargestellten Art, dar. Ein Arbeitsspiel beginnt an dem Punkt A, an dem einer der Kolben in seiner vorwärtigen Endstellung und der andere Kolben in einer rückwärtigen Endstellung steht. Wie weiter oben schon beschrieben wurde, und wie insbesondere aus dem Schaltbild, gemäß Figur 8, ersichtlich ist, gibt je nach Kolbenstellung eines der Ventile (62, 64) einen Schaltimpuls auf den Steuerschieber (56a), welcher einerseits den Weg frei macht für die entgegengesetzte Druckbeaufschlagung der Tellerventilantriebszylinder und andererseits über die Drosselventile (X , Y) verzögert einen Schaltdruckimpuls auf den Steuerschieber (56b) gibt, zur entgegengesetzten Druckbeaufschlagung der hydraulischen Antriebszylinder (48, 50).

Die Drosselventile sollen dabei so eingestellt sein, das heißt die Schaltung des Steuerschiebers (56b) soweit verzögern, daß die Ventilzylinderbetätigung und das Schalten des Steuerschiebers (56b) direkt hintereinander erfolgen.

Die Abfolge der Arbeitsvorgänge ausgehend von Punkt A ist dabei im wesentlichen die folgende:

Von A nach B schaltet der Steuerschieber (56a). Von B nach C schließen zuerst die beiden zuvor geöffneten Dickstoff-Tellerventile und danach schaltet der Steuerschieber (56b), was bedeutet, daß in Punkt C alle vier Tellerventile geschlossen sind und die Kolben in den Zylindern (48, 50) mit ihrer Bewegung in entgegengesetzter Richtung starten, das heißt der Zylinder, der zuvor gesaugt hat, beginnt seinen Förderhub und der andere Zylinder, der zuvor gepumpt hat, beginnt seinen Saughub. Dabei erfolgt von C nach D im nun saugenden Zylinder erst eine Entspannung des noch komprimierten Dickstoffes bis das ihm zugeordnete Saugventil öffnen kann und im nun pumpenden Zylinder erfolgt eine Verdichtung des zuvor angesauten Dickstoffes bis etwa zur Höhe des Förderleitungsdruckes, was zum Öffnen dieses Tellerdruckventils führt. Genau genommen öffnet dieses Tellerdruckventil etwas früher wegen der zusätzlich wirkenden Hydraulikdruckbeaufschlagung des Tellerventilantriebszylinders. Diese Größe ist aber vernachlässigbar klein. Ab Punkt D bis zum Ende E des Pumphubes fließt der Dickstoff mit konstantem Druck und konstanter Geschwindigkeit durch die Förderleitung.

Die Wirkungsweise der Pumpe des in Figur 2 dargestellten Types produziert einen ähnlichen Verlauf des Materialdruckes über die Zeit.

Wie in Figur 3 dargestellt ist, enthält die Gesamtzeit T eines Arbeitsspieles mehrere für die Bestimmung der effektiv geförderten Pumpvolumina und des Füllungsgrades relevante Zeitkomponenten. T 1 ist die Zeit von Punkt A bis Punkt C, also vom Ende der Bewegung des Kolbens bis zum Schließen der Tellerventile. Die Zeit T2 ist der Zeitraum von Punkt C bis Punkt D, also vom Beginn der Bewegung des pumpenden Kolbens bis der Druck des Dickstoffes im Zylinder soweit aufgebaut ist, daß er in etwa den Auslaßdruck erreicht, so daß sich ein Materialfluß aus dem Zylinder in den Auslaß einstellt. Die Zeit T3 ist der Zeitraum vom Punkt D bis Punkt E, währenddessen das Material aus dem Förderzylinder kontinuierlich in den Auslaß gefördert wird.

Eine Einzylinderpumpe würde eine ähnliche Kurve ergeben mit Ausnahme eines Zeitraumes, währenddessen der Kolben nach Rückwärts im Ansaugtakt läuft und kein Förderhub erfolgt. In einer Zweizylinderpumpe (wie hier betrachtet) der in den Figuren 1 und 2 dargestellten Art, wechseln sich die Förderzylinder und Kolben beim Ansaugen und Fördern ab, sodaß jeweils ein Zylinder und Kolben einen Förderhub ausführt, während der andere einen Ansaughub durchläuft.

Vergleicht man die Zeiträume $T_2$ und $T_3$ miteinander, so ergibt sich hieraus die Möglichkeit, einen in Prozent ausgedrückten Materialinhalt in einem Zylinder während eines Förderhubes zu bestimmen. Dieser Füllungsgrad errechnet sich wie folgt:

$$\text{Füllungsgrad} = \frac{T_3}{T_2 + T_3}$$

Dabei geht man selbstverständlich davon aus, daß der Kolben sich mit annähernd gleichbleibender Geschwindigkeit bewegt. Wenn man die in Prozent ausgedrückte Menge eines Arbeitspieles und das Gesamtvolumen dieses Zylinders kennt, läßt sich das in einem bestimmten Arbeitsspiel geförderte Volumen bestimmen. Addiert man die Fördervolumina mehrerer Arbeitspiele, so ergibt sich daraus ein Gesamtvolumen.

Wenn man andererseits das Gesamtvolumen eines Zeitraumes kennt, über den die Volumina bestimmt worden sind, läßt sich eine mittlere Fördermenge errechnen. Außerdem kann man eine Fördermenge für jedes Arbeitspiel bestimmen. Kennt man die gesamte Zeit T eines Arbeitspieles, den in Prozent ausgedrückten Füllungsgrad und das Gesamtvolumen bei Füllung des Zylinders mit 100 %, so läßt sich diese jeweilige gepumpte Menge für jedes Arbeitspiel feststellen.

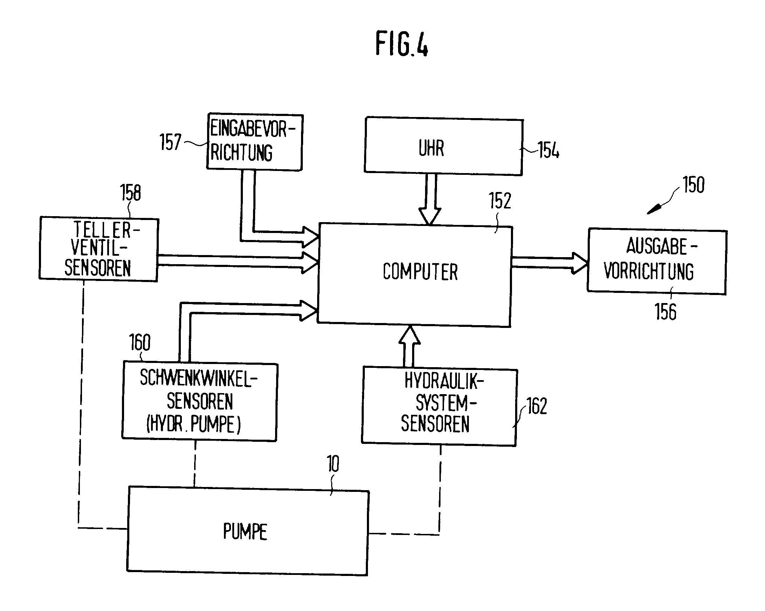

Figur 4 zeigt eine erste Ausführungsform der Erfindung, bei der der Betrieb der Pumpe (10) durch das System (150) überwacht wird, um derart eine genaue Messung der gepumpten Menge auf der Grundlage wiederholter Arbeitspiele und einer Addition der Einzelmengen vorzunehmen. Das Überwachungssystem (150) hat einen digitalen Rechner (152), der in einer bevorzugten Ausführungsform als Mikroprozessor ausgebildet ist und schließt einen zugeordneten Speicher, Eingabe- und Ausgabekreise, eine Uhr (154), eine Ausgabevorrichtung (156), eine Eingabevorrichtung (157), Tellerventilsensoren (158), Hydraulikpumpen-Schwenkwinkelsensoren (160) sowie Sensoren (162) zur Überwachung des hydraulischen Systems ein.

Die Uhr (154) gibt dem Rechner (152) die Zeit vor. Obwohl die Uhr in Figur 4 getrennt dargestellt ist, ist sie in einer bevorzugten Ausführungsform der Erfindung ein Teil des digitalen Rechners (152).

Die Ausgabevorrichtung (156) wird zum Beispiel mit einer Katodenstrahlröhre oder einer Flüssigkristallanzeige, einem Drucker oder in Form von Kommunikationseinrichtungen verwirklicht, die die Ergebnisse des Rechners (152) einem anderem computergestützen System aufgeben, das beispielsweise den Gesamtbetrieb einer Anlage überwacht, in der eine Schlammpumpe (10) benutzt wird.

Die Sensoren (158, 160, 162) überwachen den Betrieb der Pumpe (10) und produzieren Signale für den Computer (152). Die von den Sensoren (158, 160, 162) aufgenommenen Parameter ergeben den Füllungsgrad des Zylinders während des Förderhubes der Pumpe (10) und ermöglichen dem Computer (152) die Bestimmung des Zeitraumes dieses Arbeitsspiels. Aus dieser Information bestimmt der Computer (152) das Volumen des gepumpten Materials während des betreffenden Arbeitsspieles und daraus das additionsbestimmte Volumen, die Pumpenmenge während des Arbeitspieles und eine mittlere Pumpmenge während eines vorgegebenen Zeitraumes. Der Computer (152) speichert diese Daten ab und gibt ein Signal an die Ausgabevorrichtung (156), welche von einer Information abhängt, die an der Eingabevorrichtung (157) gewählt wird.

In einer bevorzugten Ausführungsform der Erfindung ist die Bestimmung des geförderten Volumes während eines Arbeitsspieles wie folgt:

Die hydraulischen Systemsensoren (162) dienen dazu, dem Computer (152) den Beginn jedes Pumpenhubes in der Pumpe (10) anzuzeigen. Diese Sensoren (162) liefern außerdem ein Signal, sobald der Förderhub beendet ist. Diese Signale werden dem Computer (152) vorzugsweise in Form von einzelnen Signalen übermittelt.

Die Tellerventilsensoren (158) stellen fest, wann das Auslaßventil während des Pumpenhubes geöffnet ist. Das Signal der Tellerventilsensoren (158) besteht vorzugsweise ebenfalls aus Einzelsignalen für den Computer (152).

Die Schwenkwinkel-Positionssensoren (160) an der Hydraulikpumpe messen die Durchflußmenge des hydraulischen Mediums der Hydraulikpumpe. Die Schwenkwinkelstellung bestimmt nämlich die Durchflußmenge und das Ausgangssignal des Stellungssensors (162) kann ein Analoges Signal an den Computer (152) sein, daß mit einem Analog-Digitalwandler zusammenwirkt, wobei der Computer es in eine Durchflußmenge umrechnen kann.

Aus den signalen der Sensoren (158, 160, 162) ermittelt der Computer (152) den Beginn des Förderhubes, den Zeitpunkt, an dem das Auslaßtellerventil öffnet und das Ende des Förderhubes. Unter Einbeziehung des Zeitsignals aus der Uhr (154) kann der Computer (152) die Zeiträume T2 und T3 errechnen. Solange die Fördermenge von der Bedienung innerhalb eines Arbeitspiel nicht geändert wird, ergibt das Verhältnis von T3 zu (T2 + T3) ein genaues Maß des Füllungsgrades während des betreffenden Arbeitsspieles. Die Schwenkwinkel-Positionssensoren (160) sollen dem Computer (152) signalisieren, ob die Kolbengeschwindigkeit im Wesentlichen während des Arbeitsspieles konstant geblieben ist. Im gegenteiligen Fall muß die Einstellung geändert werden, da zur Bestimmung des Füllunggrades jeweils das Verhältnis der Länge des Pumpenhubes mit vollständig komprimierten Material zur Länge des gesamten Kolbenhubes dient. Der Ansatz der Zeiträume T2 und T3 anstelle der Kolbenendstellungen beruht daher auf der Annahme, daß der Kolben sich im Wesentlichen mit konstanter Geschwindigkeit bewegt.

In einer bevorzugten Ausführungsform der Erfindung errechnet der Computer für jeden Hub den Füllungsgrad. Nimmt man das Gesamtfördervolumen des Zylinders, so errechnet der Computer das jeweils während eines Arbeitsspieles gepumpte Volumen. Dieses Volumen wird in ein Register im Speicher des Computer eingelesen. Dabei versieht der Computer (152) das Register mit der Zeit, woraus sich durch Addition ein Gesamtvolumen ergibt.

Da der Computer (152) außerdem den Zeitraum eines Arbeitsspieles und den Gesamtzeitraum bestimmt, währenddessen das Gesamtvolumen gefördert worden ist, kann er eine jeweilige Fördermenge für jeden Zylinder sowie eine mittlere Fördermenge während des durch Additions der Zeiträume bestimmten Gesamtzeitraumes errechnen.

Alle vier Größen (Fördermenge während eines vorgegebenen Einzelzeitraumes, Gesamtvolumen, gegenwärtige Fördermenge und durchschnittliche Fördermenge) können von der Ausgabevorrichtung (156) angezeigt werden. Normalerweise wählt der jeweilige Operator diejenige Information, die angezeigt werden soll, mit einem Komando an der Eingabevorrichtung (157) des Computers (152).

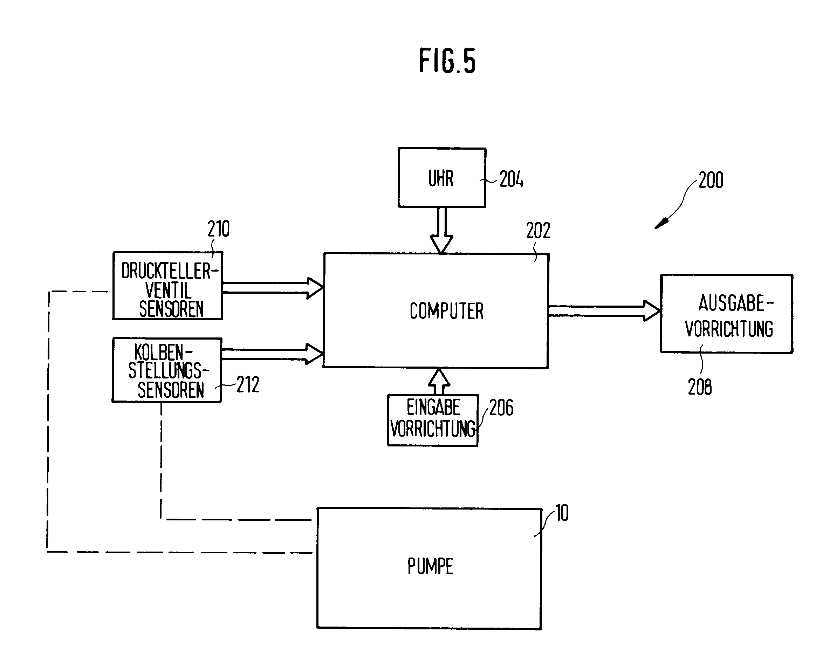

Figur 5 zeigt eine andere Ausführungsform der Erfindung, bei der das Anzeigesystem (200) die Wirkungsweise der Pumpe (10) wiedergibt. In dieser Ausführungsform hat das Anzeigesystem (200) einen Computer (202), eine Uhr (204), eine Eingabevorrichtung (206), eine Ausgabevorrichtung (208), Drucktellerventilsensoren (210) und Kolbenstellungssensoren (212).

In der Ausführungsform nach Figur 5 stellen die Kolbenstellungssensoren (212) die Stellung jedes der beiden Kolben der Pumpe (10) während des Förderhubes fest. Aus den von den Kolbenstellungssensoren produzierten Signalen sind dann die Start und Stellungspunkte jedes Pumpenhubes bekannt. Die Signale aus den Kolbenstellungssensoren sind in einer bevorzugten Ausführungsform der Erfindung digitale Signale. Beispielsweise sind die Kolbenstellungssensoren (212) vorzugsweise lineare Stellungssensoren, die Analogsensoren sein können und mit einem Analog/Digitalwandler zusammenwirken, so daß das dem Computer (202) aufgegebene Signal digital ist.

Sobald das Drucktellerventil öffnet, was der Drucktellerventilsensor (210) anzeigt, wird der von dem Kolbenstellungssensor (212) aufgenommene Wert an den Computer weitergegeben. Der Abstand vom Start des Förderhubes bis zum Öffnen des Drucktellerventils ist der Abstand L1, während der Abstand vom Öffnen des Drucktellerventils bis zum Ende des Förderhubes L2 ist. In diesem Fall ist der Füllungsgrad

$$\text{Füllungsgrad} = \frac{L_2}{L_1 + L_2}$$

Die Uhr (204) gibt an den Computer die Zeit vor, so daß die augenblicklichen und durchschnittlichen Fördermengen berechnet werden können. Wie in dem System (150) nach Figur 4 werden auch in dem System (200) nach Figur 5 das gepumpte Volumen während eines bestimmten Arbeitsspieles das addierte Gesamtvolumen, die augenblickliche Fördermenge und die durchschnittliche Fördermenge vom Computer (202) berechnet und in bestimmte Register seines Speichers eingelesen.

Mit Befehlen, die von der Eingabevorrichtung (206) an den Computer weitergegeben werden, können einzelne oder alle der so berechneten Größen auf der Ausgabevorrichtung (208) angezeigt werden. Andererseits kann als Ausgabevorrichtung (208) ein Transmitter verwendet werden, der die Information an einen weiteren Computer eines anderen Systems weitergibt, das in dem Betrieb eine Anlage überwacht, in der die Pumpe (10) verwendet wird.

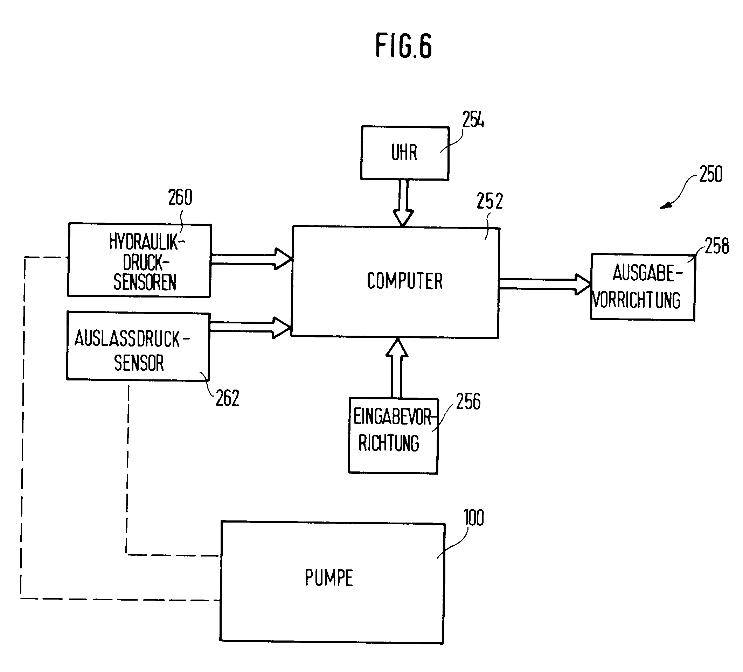

Figur 6 zeigt ein Überwachungssystem (250) für die schiebergesteuerte Pumpe (100) (nach Figur 2). Da hierbei keine Tellerventile vorhanden sind, in denen sich feststellen läßt, wann der Druck im Förderzylinder gleich dem Auslaßdruck der Pumpe (100) ist, muß diese Information mit Hilfe anderer Parameter gefunden werden.

Das Überwachungssystem (250) hat einen Computer (252), eine Uhr (254), eine Eingabevorrichtung (256), eine Ausgabevorrichtung (258), einen hydraulischen Systemdrucksensor (260) und einen Auslaßdrucksensor (262). Bei dieser Ausführungsform erhält der Computer Analog- oder Digitalsignale von den Drucksensoren (260, 262). Wenn der hydraulische Pumpendruck auf der Hochdruckseite einen Druck erreicht, der unter Berücksichtigung des Kolbenflächenübersetzungsverhältnisses zwischen Hydraulikantriebszylinder und Förderzylinder, dem Auslaßdruck des Dickstoffes entspricht, der von dem Auslaßdrucksensor (262) oder an einer bestimmten Stelle stromabwärts vom Auslaß (124) festgestellt wird, merkt sich der Computer die Zeit während des Arbeitsspieles. Er bestimmt am Ende des Arbeitsspieles das Verhältnis oder den Füllungsgrad, in dem er den Zeitraum T3 durch die Summe (T2 + T3) dividiert.

Wie in der Ausführungsform nach Figur 4 setzt das System (250) ebenfalls voraus, daß sich der Kolben mit konstanter Geschwindigkeit während des Pumpenhubes bewegt. Zur Steigerung der Genauigkeit läßt sich ein Schwenkwinkel-Positionssensor entsprechend dem Sensor (160) nach Figur 4 in das System (250) einführen.

Wie bei den Ausführungsformen nach den Figuren 4 und 5 berechnet und speichert das System (250) das Volumen während eines Arbeitsspieles, das addierte Gesamtvolumen, die augenblickliche Fördermenge und eine mittlere Fördermenge. Diese Information wird von der Ausgabevorrichtung (258) auf Befehl von der Eingabevorrichtung (256) ausgegeben.

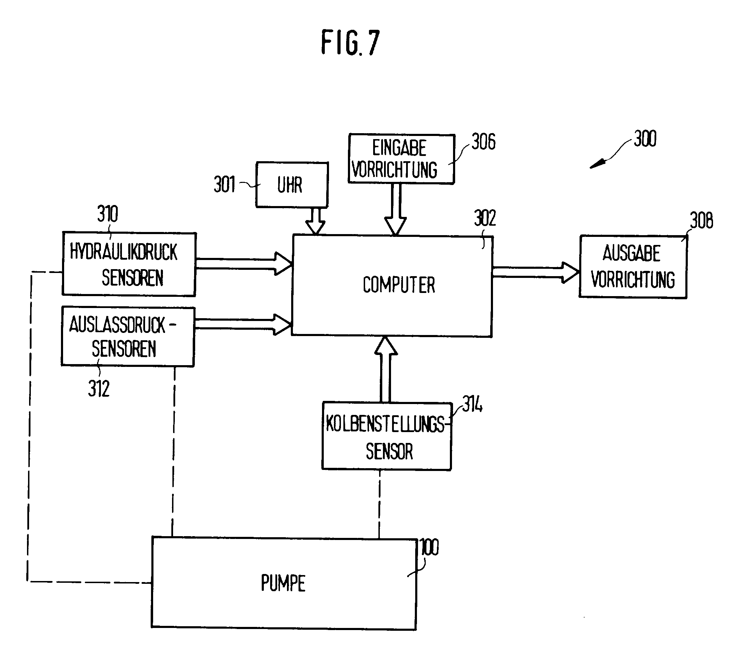

Figur 7 zeigt ein Überwachungssystem (300) für den Betrieb der Pumpe (100). Das System (300) hat einen Computer (302), eine Uhr (304), eine Eingabevorrichtung (306), eine Ausgabevorrichtung (308), hydraulische Drucksensoren (310), einen Auslaßdrucksensor (312) und einen Kolbenstellungssensor (314). Bei dieser Ausführungsform liest der Computer (302) die Stellung des Kolbens am Beginn jedes Pumpenzyklusses und am Ende jedes Pumpenzyklusses und während der Stellung und Zeit, in der der hydraulische Pumpendruck vom Sensor (310) größer oder gleich dem unter Berücksichtigung des Kolbenflächenübersetzungsverhältnisses äquivalentem Auslaßdruck ist, der vom Auslaßdrucksensor (312) festgestellt wird. Das System (300) berechnet und speichert die gleiche Information, wie sie im Zusammenhang mit den Systemen (150, 200, 250) in den Figuren 4 bis 6 beschrieben ist.

Es sind aber noch andere Ausführungsformen möglich. Beispeilsweise läßt sich durch Feststellung des Pumpendruckes und Bestimmung der Änderung des Verlaufes der Druckkurve nach Figur 3 der Zeitpunkt in einem Zyklus bestimmen, an dem der Druck im Zylinder gleich oder größer als der Auslaßdruck ist. In dem man kontinuierlich den hydraulischen Pumpendruck anzeigt und die Kurvenanalyse ausführt, braucht man keinen Auslaßdrucksensor (entsprechend dem Drucksensor (312) nach Figur 7) bei diesen Ausführungsformen.

Im Ergebnis ermöglichen die vorbeschriebenen Verfahren/Ausführungsformen die Messung eines genauen Volumens und einer Fördermenge einer Dickstoffpumpe. Dabei wird berücksichtigt, daß sich in einer Dickstoffverdrängerpumpe der Füllungsgrad des Pumpenzylinders von Zyklus zu Zyklus ändern kann. In dem man aber den Füllungsgrad auf der Basis des Arbeitsspieles bestimmt, ergeben sich die Fördermenge während des Arbeitsspieles, das addierte Gesamtfördervolumen, die augenblickliche Fördermenge und die durchschnittliche Fördermenge mit hoher Genauigkeit.

Über das Vorbeschriebene hinaus zeigt Figur 1, daß anstelle des reinen Zulaufes des Dickstoffes aus einem Vorratsbehälter (1, 120) der Dickstoff auch mittels eines Stetigförderers (314) in die Einlässe (12, 14) gefördert werden kann.

Der Stetigförderer (314) weist in einer bestimmten Ausführung, wie dargestellt, zwei Wellen (320, 322) auf, welche mit Messern (324) bestückt sind, die den Dickstoff in Richtung der Einlässe (12, 14) der Pumpe (10) fördern. Die Wellen (320, 322) werden von einem hydrostatischem Stetigfördererantrieb (326) angetrieben.

Die Steuerung des Stetigfördererantriebes erfolgt über den Ventilblock (56) in der nachfolgend beschriebenen Weise:

Wenn z.B. der Kolben (24) sich in Richtung des Ventilgehäuses (42) bewegt und Dickstoff in den Auslaß (16) pumpt und gleichzeitig der Kolben (22) sich vom Ventilgehäuse (42) entfernt, und dabei über Einlaß (12) Dickstoff in den Zylinder (18) saugt, ist der Stetigförderer in Betrieb, d.h. daß er dem Einlaß (12) Dickstoff zuführt. Wenn die Kolben ihre Endstellungen erreicht haben, sind der Pumphub und der Saughub am Ende und der Stetigförderer wird stillgesetzt. Erst nach Umsteuerung aller Ventile, also mit Wiederbeginn des Laufs der Förderkolben, diesmal in entgegengesetzter Richtung, wird der Stetigförderer wieder eingeschaltet.

Die Verknüpfung zwischen dem Ventilblock (56) und dem Stetigfördererantrieb (326) ist in einer gestrichelten Linienführung (350) schematisch dargestellt.

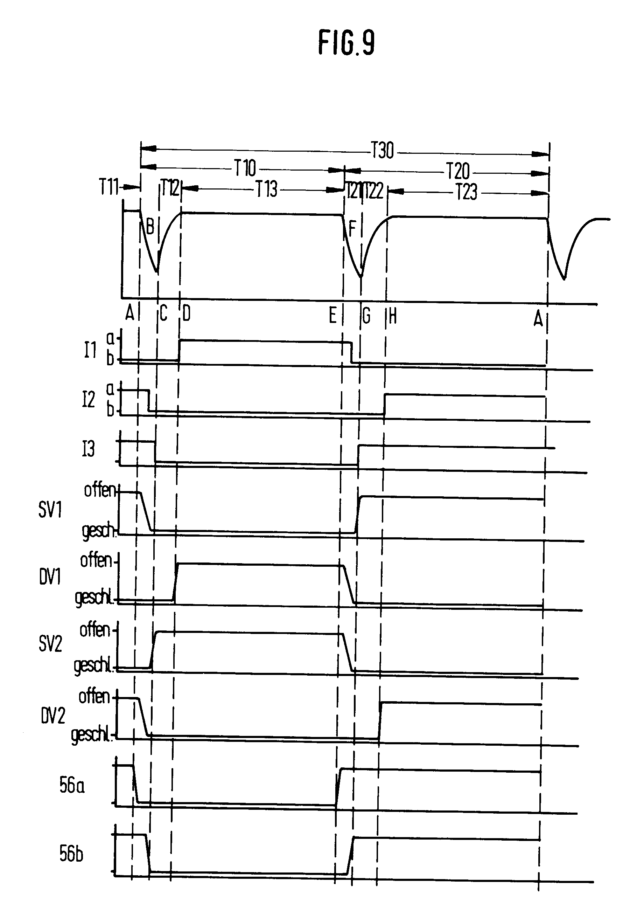

Zum besseren Verständnis des erfindungsgemäßen und nachfolgend beschriebenen vollautomatischen integrierten Dickstoffpumpenkontrollsystems wird zunächst auf das Diagramm nach Figur 9 Bezug genommen:

| | |
|---|---|
| $T_{10}$ = | Zyklusdauer des Zylinders 1 (Pumphub) = AE |
| $T_{20}$ = | Zyklusdauer des Zylinders 2 (Pumphub) = EA |
| Punkt A: | Förderkolben erreicht Endstellung |
| Punkt B: | Steuerschieber 56A hat geschaltet |
| Punkt C: | Alle Tellerventile haben geschlossen und unmittelbar folgend starten die Förderkolben in entgegengesetzter Richtung, Saugventil öffnet sich. |
| Punkt D: | Kompressionshub ist abgeschlossen, Druckventil öffnet sich, Beginn des Materialflußes von der Pumpe in die Förderleitung. |
| Punkt E: | Entspricht Punkt A |

Funktionsablauf während der Zykluszeit

| | |
|---|---|
| AB: | Umschalten des Steuerschiebers 56A |
| BC: | Schließen der offenen Tellerventile und anschließendes Umschalten des Steuerschiebers (56B). |

Anmerkung:

Das Erreichen ansich sowie die Zeitpunkte des Erreichens der Verschlußendstellungen der Tellerventile (insbesondere des Druckventils) sowie der Schaltendstellung des Steuerschiebers (56B) werden durch Annäherung der jeweiligen Kolben der Ventile an Näherungsinitiatoren als Indikatorimpulse $I1_b$ bzw. $I2_b$ (Tellerdruckventile) und $I3$ (Steuerschieber 56B) erfaßt und an den Computer weitergeleitet zur rechnerischen Verarbeitung bzw. ggf. zur Korrektur der Drosselventileinstell-

lungen.

CD:　Vorwärtsbewegung des Pumpkolbens und damit Komprimieren des zuvor angesaugten Dickstoffes bis auf den Druck am Auslaß der Pumpe und gleichzeitig Rückwärtsbewegung des Saugkolbens und damit Entspannung (Dekompression) des durch den vorherigen Pumphub komprimierten Dickstoffes, einhergehend mit dem Öffnen des Tellersaugventils.

DE:　Öffnen des Tellerdruckventils und damit Lauf des effektiven Pumphubes.

Anmerkung:

Der Zeitpunkt des Beginns der Öffnung des Druckventils wird als Indikatorimpuls (Entfernen des Kolbens vom Näherungsinitiator) $I2_a$ bzw. $I1_a$ an den Computer weitergeleitet.

Die Zeitintervalle EF, FG, GH und HA sind analog den Zeitintervallen AB, BC, CD und DE, jedoch beim anderen Pumpenzylinder.

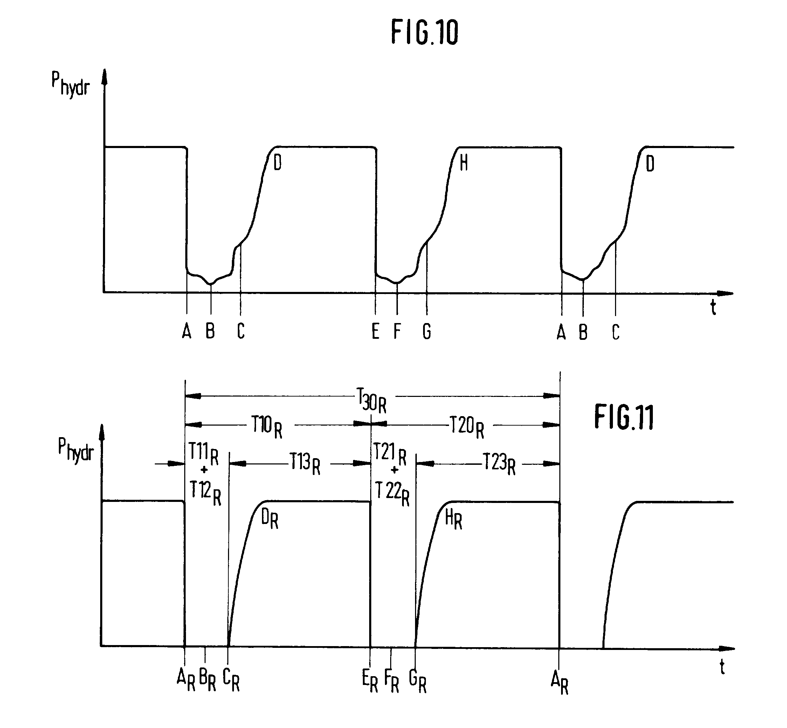

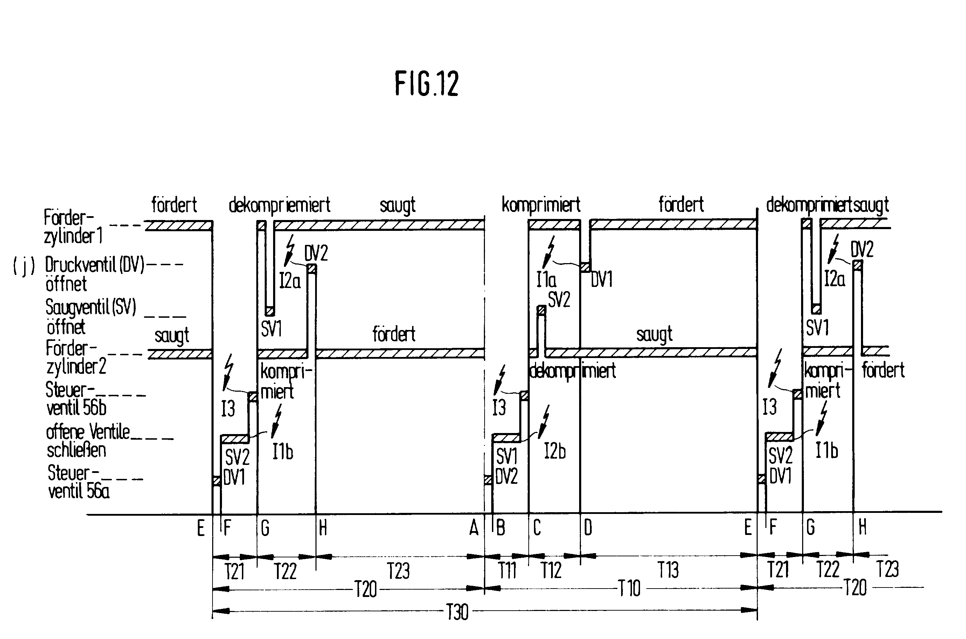

Der dazugehörige Druckverlauf des hydraulischen Antriebsmediums ist in dem Diagramm nach Figur 9 wiedergegeben. Wenn die Pumpe nicht mit Tellerventilen, sondern mit einem Schwenkrohrschieber gesteuert wird, ergibt sich ein entsprechender Druckverlauf, der im Diagramm der Figuren 10 und 11 dargestellt ist.

Aufschlußreicher für das bessere Verständnis ist jedoch das Balkendiagramm nach Figur 12. Deshalb wird im folgenden darauf Bezug genommen. So werden die nachstehenden Kennwerte wie folgt ermittelt:

Volumetrischer Wirkungsgrad $\eta_{vol}$ ges [%]

$$\eta_{vol_1} = \frac{T_{13}}{T_{12} + T_{13}} \, 100[\%] \text{ (für Zylinder 1)}$$

$$\eta_{vol_2} = \frac{T_{23}}{T_{22} + T_{23}} \, 100[\%] \text{ (für Zylinder 2)}$$

$$\eta_{vol} \text{ ges} = \frac{\eta_{vol_1} + \eta_{vol_2}}{2}$$

Es empfiehlt sich, alle zwei Hübe eine Wertekorrektur vorzunehmen.

Theoretische Dickstofffördermenge $Q_{theoretisch}$ (m³/h)

$$Q_{theor} = \frac{n \cdot V_z \cdot 60}{1000} \, [m^3/h]$$

Darin bedeuten

$V_z =$　Hubvolumen eines Förderzylinders der Dickstoffpumpe in ($dm^3$) (wird je nach Pumpentyp als Festwert eingegeben).

$n =$　Anzahl der Einzelhübe, also Indikatorsignale $I_3$ pro Minute.

Das Hubvolumen kann etwa zwischen 3 und 1000 Liter liegen (Inhalt des Förderzylinders).

Die Hubzahlen können etwa zwischen 0,5/min und 35/min liegen.

Die theoretische Fördermenge wird zweckmäßigerweise alle 2 Hübe berechnet.

Ermittlung der Zeiten T20, T21, T22, T23 bzw. der entsprechenden Zeiten des Folgehubes T10, T11, T12, T13.

Die theoretische Gesamtzeit eines Hubes (T20/T10) ist rechnerisch bestimmbar aus der von der Hydraulikpumpe zugeführten Ölmenge

$$Q_{hydr_{theor}} \, [l/min]$$

und den Verbauchsmengen der Differentialzylinder (VD) und der Gesamtschaltölmenge (VS)(Schaltölmenge für Steuerventile 56a/56b und der Tellerventilantriebszylinder) wie folgt:

$$T_{10} = T_{20} = \frac{V_D + V_S}{Q_{hydr_{theor}}} \cdot 60 \, [sec]$$

Zum Vergleich ist die Gesamtzeit eines Hubes meßbar und entspricht der Zeit zwischen zwei funktionsgleichen Indikationen zweier aufeinanderfolgender Hübe, z.B. zwischen $I1_a$ und $I2_a$ = T20 oder zwischen $I2_a$ und $I1_a$ = T10.

Die Zeit T22, welche der Zeit T12 entspricht, wird gemessen als Zeitintervall zwischen den Impulsen I3 und $I2_a$ bzw. I3 und $I1_a$.

Die Zeit T21 bzw. T11 ist errechenbar aus dem Verhältnis der für diesen Zeitraum verbrauchten Ölmenge und der für den gesamten Zyklus verbrauchten Ölmenge. Die für den gesamten Zyklus verbrauchte Ölmenge ist bekannt aus der vorgenannten Formel für die Errechnung der Gesamtzeit T20 bzw. T10, nämlich

Gesamtverbrauchsölmenge = VD + VS

Die in der Zeit T21 bzw. T11 verbrauchte Ölmenge beträgt nur einen Teil der gesamten Schaltölmenge, nämlich V1, der benötigt wird, um die beiden Steuerventile $56_a$ und $56_b$ zu schalten und zwei Tellerventile zu schließen. Der Verbrauch der restlichen Schaltölmenge, nämlich V2 zum Öffnen der anderen zwei Tellerventile fällt in das Zeitintervall T22 bzw. T12.

Somit gelten für die Errechnung der Zeiten T21 bzw. T11 folgende Beziehungen bei Hydraulikeinkreisschaltung:

Gesamtschaltölverbrauch = VS = VS1 + VS2

Differentialzylinder Ölverbauch = VD

Gesamtölverbrauch = VD + VS

Ölverbauch für den Teilzyklus T21 bzw. T11 = VS1

Daraus folgt:

$$\frac{T_{21}}{T_{20}} = \frac{T_{11}}{T_{10}} = \frac{V_{S1}}{V_D + V_S}$$

$$T_{21} = T_{20} \cdot \frac{V_{S1}}{V_D + V_S}$$

oder

$$T_{11} = T_{10} \cdot \frac{V_{S1}}{V_D + V_S}$$

Da die Ölverbrauchswerte je Maschine unveränderliche Werte sind, lassen sie sich zu einem Pumpenspezifischen Faktor

$$f = \frac{V_{S1}}{V_D + V_S}$$

zusammenfassen, woraus folgt:

$$T_{21} = T_{20} \cdot f$$

$$T_{11} = T_{10} \cdot f$$

Der Faktor f muß für die jeweils verwendete Pumpentype eingegeben werden. Letztlich ermitteln sich die Zeiten T23 bzw. T13 aus den Summenformeln

$$T20 = T21 + T22 + T23$$

$$T10 = T11 + T12 + T13$$

zu

$$T23 = T20 - T22 - T21$$

$$T13 = T10 - T12 - T11$$

Hinweis: Der Vorgang j (Druckventil öffnet) verringert die Hubgeschwindigkeit der Förderkolben, was aber bei der Berechnung von $T13^*/T23^*$ als effektive Pumpzeit in sofern berücksichtigt werden muß, in dem entsprechend dem Anteil der Schaltölverbrauchsmenge VS3 für das Öffnen eines Druckventils an dem für den oben bestimmten Zeitbereich HA/DE gesamten Ölverbauch ein Abzug an der oben errrechneten Zeit T13/T23 vorzunehmen ist.

Dieser Zeitabzug errechnet sich aus

$$T_{23}^*(T_{13}^*) = T_{23}(T_{13}) - \Delta T_{23} (\Delta T_{13})$$

wobei VS3 als pumpenspezifische Größe für den verwendeten Pumpentyp jeweils einzugeben ist. Somit folgt

$$T23^* = T23 - \Delta T23$$

$$T13^* = T13 - \Delta T13$$

Damit können die korrigierten Zeiten $T23^*$ und $T13^*$ zur Berechnung der volumetrischen Wirkungsgrade $\eta_{vol_1}$ und $\eta_{vol_2}$ herangezogen werden, in dem sie zur Gesamtlaufzeit TD des Differentialzylinders ins Verhältnis gesetzt werden.

Dabei ist

$$TD = \frac{V_D}{Q_{hydr_{theor}}} \cdot 60 \ [sec]$$

womit folgt:

$$\eta_{vol} = \frac{T_{23}^*}{T_D} \ oder \ \frac{T_{23}^*}{T_D} \cdot 100 \ [\%]$$

## Einfluß der Drosselventileinstellung

Die richtige Einstellung der Drosselventile ist für die korrekte Messung von entscheidender Bedeutung. Bei richtiger Einstellung entspricht der tatsächliche Zeitablauf dem im Balkenplan dargestellten Zeitablauf.

## Drosselventile zu weit offen:

Der Steuerschieber 56b schaltet gleichzeitig mit oder sogar vor dem Schließen der zuvor geöffneten Tellerventile. Die Tellerventile schließen also erst, wenn die Kolben bereits fahren, so daß bereits gepumptes Fördermedium in den ansaugenden Zylinder zurückströmt, solange, bis das Druckventil geschlossen ist.
Der Meßfehler kann daran erkannt werden, daß der Impuls $I1_b$ oder $I2_b$ (schließen des Druckventils) zeitlich erst nach dem Impuls I3 (Umschalten des Steuerschiebers 56b und damit der Förderkolbenrichtung) auftritt. Hierbei muß eine Störmeldung erscheinen "Drosselventile zu weit geöffnet".

## Drosselventile zu weit geschlossen:

Der Steuerschieber 56b schaltet erst wesentlich später nach dem Schließen der zuvor geöffneten Ventile. Dabei wird der Drosseldruck so hoch, daß das Sicherheitsventil anspricht und darüber Öl zum Tank abströmt. Es wird der Zeitabstand zwischen Impuls $I2_b$ bzw. $I1_b$ und Impuls I3 gemessen. Bei überschreiten eines Zeitanteils $f^*$ von wesentlich mehr als $f/2$ muß eine Störmeldung erscheinen "Drosselventil zu weit geschlossen". $f^*$ sollte über Potentiometer eingestellt werden können zwischen $f/2$ und $2f$; ggf. kann nach Vorlage von Versuchsergebnissen mit dem VIP-System ein fester Wert eingegeben werden. Erste Einstellung, bei deren Erreichen die Störmeldung erfolgt: $f^* = f$.

## Meßwerte

Als Indikation für die Gesamtdauer eines Arbeitszyklus werden, wie schon erwähnt, Näherungsschalter im Steuerblock Z.B. an beiden Enden des Steuerschiebers 56b verwendet.
Es sind die standardmäßig vorhandenen Näherungsschalter im Steuerschieber 56b, die auch für die Hubzahlmessung benutzt werden.

Sie geben das Signal I3 als Timersignal für die Gesamtdauer T10 bzw. T20, wobei das Signal zeitmäßig kurz nach Punkt C bzw. kurz nach Punkt G auftritt.

Zur Indikation des Zeitpunktes D bzw. H (Beginn der Förderung) wird ein Näherungsschaltersignal an jeweils dem einen oder dem anderen Druckventilantriebskolben verwendet, der mit $I1_a$ bzw. $I2_a$ den Beginn des Öffnens des jeweiligen Druckventils signalisiert.

Als Indikation für die richtige Einstellung der Drosselventile wird, wie ebenfalls schon erwähnt, das Schließen des Druckventils verwendet, und dabei die Impulse $I1_b$ bzw. $I2_b$ mit dem Impuls I3 verglichen.

Vergleich der Zylinderfüllmengen (über Grenzfaktor X1 in Prozent)

Wenn $\eta_{vol_1} \neq \eta_{vol_2}$ ist, ist Signal zu geben, sobald der Unterschied zwischen den berechneten Werten $\eta_{vol_{1,2}}$ für Zylinder 1 und Zylinder 2 mehr als X1 in Prozent beträgt. X1 muß eingestellt werden können zwischen 5 und 50 %. Ersteinstellung X1 = 10 %.

Wenn der vorgegebene und voreingestellte Grenzwert X1 unzulässig überschritten wird, wird eines der beiden folgenden Signale angezeigt: "Saugventil 1: Mediumzufuhr gestört" und/oder "Saugventil 2: Mediumzufuhr gestört".

Welcher der beiden Förderzylinder gestört ist, erkennt der Rechner aus der Stellung der jeweiligen Druckventile, z.B.

Saugventil 1 ist gestört, wenn Druckventil 1 länger geschlossen bleibt als Druckventil 2, also T12 größer T22.

Saugventil 2 ist gestört, wenn Druckventil 2 länger geschlossen bleibt als Druckventil 1, also T 22 größer T12.

Zylinderfüllung an beiden Zylindern gestört (über Grenzfaktor X2 in Prozent)

Wenn bei beiden Förderzylindern das gemessene $\eta_{vol}$ einen eingestellten Wert X2 unterschreitet, der sich an den jeweils vorliegenden Betriebsumständen zu orientieren hat, ist ein Signal zu geben für

$$\eta_{vol} = \frac{\eta_{vol_1} + \eta_{vol_2}}{2} < X_2$$

Mediumzulauf gestört.
X2 ist einstellbar zwischen 90 % und 30 %.
Ersteinstellung: 70 %

Hydraulikantrieb gestört (zu hoher Lecköanteil bzw. Potentiometer hat sich gelöst)

Die Hubgeschwindigkeit der Pumpenförderkolben ist direkt proportional zur Fördermenge $Q_{hydr_{theor}}$ der Hydraulikpumpe. Sie ergibt sich aus den Parametern der jeweils verwendeten Dickstoffpumpentype.

Wenn die gemessene Hubzahl n wesentlich geringer ist, als die Hubzahl $n_{theorisch}$, die der von der Hydraulikpumpe theoretisch geförderten Ölmenge entspricht, ist die gesamte Leckölmenge zu hoch.

Die Hydraulikpumpenfördermenge wird über ein Potentiometer im Verstellantrieb für die Regelung der Hydraulikpumpenfördermenge gemessen. Ein Abgleich während des Pumpenprobebetriebes unter Druck eliminiert die normalen Spaltverluste weitgehend. Wenn die gemessene Hubzahl $n = X3 \times n_{theoretisch}$ ist, und X3 den Wert von 0,85 unterschreitet (15 % höhere Spalt- bzw. Leckölverluste als im Probelauf) wird ein Signal gegeben:

"Hydraulikantriebssystem überprüfen"
Der Wert X3 muß für Prüfzwecke als Signal in Prozent abgefragt werden können.

Tellerventil defekt

Wenn eines der Tellerventile defekt ist, also nicht richtig schließt, ist der Förderdruck bei einem Hub wesentlich niedriger als bei dem anderen, da ein Teil des gepumpten Mediums/Dickstoffes nicht in die Förderleitung, sondern in den saugenden Zylinder (wenn dessen Druckventil defekt ist) oder in den Ansaugbereich (wenn Saugventil des pumpenden Zylinders defekt ist) zurückströmt. Dabei reduziert sich die Strömungsgeschwindigkeit in der Förderleitung und entsprechend reduziert sich der Arbeitsdruck bei diesem Arbeitshub.

Ist der Arbeits- oder Hydraulikdruck niedriger beim Pumphub des Zylinders 1 (2), ist das Druckventil von Zylinder 2 (1) oder das Saugventil von Zylinder 1 (2) defekt.

Der Rechner vergleicht den Hydraulikdruck oder den Mediumdruck (entsprechende Sensoren/z.B. Druckmanometer vorausgesetzt) von zwei aufeinanderfolgenden Arbeitshüben und gibt die folgenden Signale:
"Druckventil 2 oder Saugventil 1 defekt",
unter der Bedingung $p1 \leq X4 \times p2$,
"Druckventil 1 oder Saugventil 2 defekt",
unter der Bedingung $p2 \leq X4 \times p1$, wobei X4 einstelbar ist zwischen 0,95 und 0,75. Ersteinstellung: 0,8

Hinweis:

Wenn gleichzeitig der Störfall "zu hoher Lecköverlust" auftritt, muß das Signal "Ventil defekt" unterdrückt werden, da dann mit größerer Wahrscheinlichkeit der im Druckhub befindliche Differentialzylinderkolben höhere Lecköverluste aufweist, als der im Saughub befindliche Kolben und nicht Tellerventilleckagen die Ursache der niedrigeren Strömungsgeschwindigkeit des Dickstoffes in der Förderleitung als Grund für den niedrigeren Druck sind.

Hydr. Antrieb der Dickstoffpumpe defekt (in der Abfrage übergeordnet zu dem Störfall des zu hohen Lecköverlustes)

Wenn T10 und T20 (Dauer der Arbeitszyklen) unterschiedliche Werte aufweisen, ist dieses ein Hinweis auf

- Leckagen bei einem Differentialzylinder oder
- Leckagen in den Schaltelementen oder
- Leckagen an den Ventilantriebszylindern

Der Rechner gibt darauf hin ein Signal
"Verschleiß der Hydraulikkomponenten der Dickstoffpumpe"
wenn folgende Bedingunger. gleichzeitig erfüllt sind:

- der Unterschied zwischen T10 und T20 größer als
10 % ist und der, diesen Unterschied kennzeichnende Faktor X5 sich wie folgt errechnet

$$T_{10}(T_{20}) > T_{20}(T_{10})$$

$$X_5 = \frac{T_{10}(T_{20}) - T_{20}(T_{10})}{T_{20}(T_{10})} > 10\%$$

- die Drosselventilstellung normal ist
- der Zylinderfüllungsunterschied kleiner als X1 in Prozent, also normal ist
- weitere Störmeldungen wie hoher Leckölanteil bzw. Ventildefekt zwar anliegen, aber in der Anzeige unterdrückt sind.

X5 kann voreingestellt werden auf 5 - 20 %. Ersteinstellung: 10 %

## Patentansprüche

1. Dickstoffpumpe mit wenigstens einem Förderzylinder, einem Verdrängerkolben, einem hydraulischen Verdrängerkolben-Antrieb zur Zuführung von Bewegungsenergie während eines aus Förder- und Ansaughub bestehenden Arbeitsspiels und Ventilen, die den Förderzylinder beim Förderhub mit einem Auslaß- und beim Ansaughub mit einem Einlaß verbinden, sowie einer Überwachungseinrichtung zur Überwachung der Pumpenfunktion, **gekennzeichnet durch** eine fortlaufende Fehlerüberwachung und -anzeige unter Verwendung sowohl von Indikatoren des hydrostatischen Pumpenantriebes als auch der aus gemessenen Druck-, Zeit- und Wegparametern des Dickstoffpumpenzylinders zum Zeitpunkt des Öffnens des Dickstoffauslaßventils errechneten Füllungsgrad- und Durchflußmengenindikatoren, wobei die Schaltfunktionen des hydrostatischen Antriebes mit der Funktion der Kolbenspiele in den Dickstoff-Förderzylindern verglichen und aus Abweichungen Fehler bestimmt und angezeigt werden.

2. Dickstoffpumpe nach Anspruch 1, **dadurch gekennzeichnet**, daß die Zeiträume gemessen werden, die vom Beginn des Förderhubes bis zu einem Ausströmsignal, das den Zeitpunkt wiedergibt, an dem der Dickstoff aus dem Förderzylinder in die Leitung auszuströmen beginnt, sowie von diesem bis zum Ende des Förderhubes vergehen, wobei ein Rechner vorgesehen ist, der die Volumina aus diesen Zeitsignalen errechnet.

3. Dickstoffpumpe nach Anspruch 1, **dadurch gekennzeichnet**, daß die Verdrängerkolbenstellung im Förderzylinder festgestellt und aus der Stellung des Verdrängerkolbens beim Auftreten eines Ausströmsignals das Volumen bestimmt wird.

4. Dickstoffpumpe nach Anspruch 1 mit einer Ventilanordnung bestehend aus einem Auslaßtellerventil, das den Förderzylinder mit dem Auslaß verbindet, sobald der Druck in Förderzylinder den Auslaßdruck erreicht oder diesen übersteigt und mit einem Einlaßventil, das zu Beginn des Ansaughubes öffnet, **dadurch gekennzeichnet**, daß ein Ausströmsignal erzeugt wird, sobald das Auslaßventil öffnet und das Aus- und das Einlaßventil so gesteuert werden, daß beide Ventile an den Umkehrpunkten der Kolbenbewegung geschlossen sind.

5. Dickstoffpumpe nach einem der Ansprüche 1 bis 4, **dadurch gekennzeichnet**, daß bei einer Zweizylinderdickstoffpumpe ein Ausströmsignal für jeden der beiden Förderzylinder erzeugt wird.

6. Dickstoffpumpe nach einem der Ansprüche 1 bis 5, **dadurch gekennzeichnet**, daß zur Erzeugung des Ausströmsignals eine Druckmessung der hydraulischen Antriebsflüssigkeit und eine Druckmessung des Dickstoffes an den Auslässen erfolgt, und daß ein Ausströmsignal erzeugt wird, wenn der hydraulische Druck und der Dickstoffdruck ein vorgegebenes Verhältnis zueinander aufweisen.

7. Dickstoffpumpe nach den Ansprüchen 1 bis 3, **dadurch gekennzeichnet**, daß die Durchflußmenge der hydraulischen Antriebsflüssigkeit erfaßt wird, und hierauf die Volumenmessung des Dickstoffes beruht.

8. Dickstoffpumpe nach Anspruch 1, **dadurch gekennzeichnet**, daß aus den während einer Mehrzahl von Förderhüben berechneten Fördervolumina ein Gesamtvolumen berechnet wird.

9. Dickstoffpumpe nach Anspruch 8, **dadurch gekennzeichnet**, daß der Zeitraum gemessen wird, währenddessen eine Mehrzahl von Förderhüben ausgeführt werden und hieraus eine durchschnittliche Fördermenge als Funktion der Einzelvolumina und der gemessenen Zeit bestimmt wird.

10. Dickstoffpumpe nach Anspruch 1, **dadurch gekennzeichnet**, daß die Zeit bestimmt wird, während der ein Förderhub ausgeführt wird und aus diesem und der gemessenen Zeit eine Fördermenge bestimmt wird.

11. Dickstoffpumpe nach Anspruch 1, **dadurch gekennzeichnet**, daß als Indikatoren des hydrostatischen Pumpenantriebes die Einstellungszustände der beiden Drosselventile (X, Y), der Schaltzustände der hydrostatischen Pumpenventil- bzw. -schieberantriebe, sowie des zum Umschalten des hydrostatischen Pumpenantriebes dienenden Ventiles (56b) als Funktion der Zeit dienen und ihr Vergleich mit den Förderkolbenspielen der Pumpe die Abweichungen für die Fehleranzeige bestimmt und anzeigt.

12. Dickstoffpumpe nach Anspruch 11, **dadurch gekennzeichnet**, daß als weiterer Indikator der hydraulische Arbeitsdruck im hydrostatischen Pumpenantrieb dient, mit dem zeitgleich der Dickstofförderdruck gemessen wird und zur Fehlerbestimmung der Pumpenventile dient.

13. Dickstoffpumpe nach einem der Ansprüche 11 oder 12, da**durch gekennzeichnet**, daß wenigstens einige der Indikatoren des hydrostatischen Pumpenantriebes zu dessen Selbstüberwachung und zur Fehleranzeige dienen.

14. Dickstoffpumpe nach Anspruch 13, **dadurch gekennzeichnet**, daß die richtige Öffnungsweite der Drosselventile aus einem Zeitvergleich der Öffnungs- und Schließstellung der Pumpenventile über die Zeit in der Weise erfolgt, daß das Zeitintervall zwischen Öffnen und Umschalten bzw. Schließen des oder der Pumpenventile einen Grenzwert (f) über- oder unterschreitet.

15. Dickstoffpumpe nach einem der Ansprüche 11 bis 13, **dadurch gekennzeichnet**, daß zur Überwachung der richtigen Förderzylinderfüllungen bei Zweizylinderdickstoffpumpen die volumetrischen Wirkungsgrade der beiden Förderzylinder, die jeweils aus dem Quotienten des Zeitintervalls (T13) zwischen dem Öffnen des Druckventils des betreffenden Förderzylinders D (H) bis zum Erreichen der Endstellung E (A) des Förderkolbens und der Summe aus diesem Zeitintervall und dem Zeitintervall (T12) zwischen der Förderkolbenumkehr C (G) und dem Öffen des Druckventils D (H) gegenbenenfalls nach einem Kompressionshub des Förderkolbens bestimmt sind, in der Weise dienen, daß Differenzen der beiden Wirkungsgrade unterschiedliche Förderzylinderfüllungen anzeigen, während die Abweichung der Hälfte der Summe beider Wirkungsgrade von einem vorgegebenen Grenzwert eine Störung im Zulauf des Dickstoffes anzeigt.

16. Dickstoffpumpe nach einem der Ansprüche 11 bis 15, **dadurch gekennzeichnet**, daß zur Überwachung des hydrostatischen Antriebes dessen Lecköilmengen dienen, die in der Weise bestimmt sind, daß größere Abweichungen der theoretischen Fördermenge, die aus der Anzahl der mit Hilfe der Stellung (56b) eines für die Steuerung des Pumpenventils dienenden Druckventils gemessenen Förderkolbenhübe und des Zylinderhubvolumens bestimmt ist, von der tatsächlichen Fördermenge des hydraulischen Antriebsmediums, die sich aus der Stellung des Verstellantriebes der hydraulischen Pumpe des hydrostatischen Antriebes ergibt, bestimmt und angezeigt werden.

17. Dickstoffpumpe nach einem der Ansprüche 11 bis 16, **dadurch gekennzeichnet**, daß die Funktion der Druckventile mit Hilfe von Druckmessungen in der Weise überwacht und angezeigt wird, daß der mit einem Grenzfaktor multiplizierte tatsächliche Förderdruck des Dickstoffes kleiner als der vorgegebene Förderdruck der Dickstoffpumpe ist.

18. Dickstoffpumpe nach den Ansprüchen 16 und 17, **dadurch gekennzeichnet**, daß die Anzeige der Druckventilüberwachung unterdrückt wird, sobald eine Abweichung der Lecköilmenge angezeigt wird.

19. Dickstoffpumpe nach einem der Ansprüche 11 bis 18, **dadurch gekennzeichnet**, daß eine unzureichende Funktion des hydrostatischen Antriebes bei Zweizylinderkolbenpumpen durch Vergleich der Zeiträume der beiden Kolbenbewegungen bestimmt und angezeigt wird, die jeder Kolben vom Öffnen des Druckventils bis zum Erreichen seiner Endstellung im Förderzylinder benötigt.

20. Dickstoffpumpe nach einem der Ansprüche 11 bis 19, **dadurch gekennzeichnet**, daß die Bestimmung der vorderen Endstellungen der Druckventilantriebszylinder und des Steuerventils (56b) (I1, I2, I3) mit Hilfe von der Geschlossenstellung bzw. Endstellung zugeordneten Näherungsschalter erfolgt.

21. Dickstoffpumpe nach einem der Ansprüche 11 bis 20, **dadurch gekennzeichnet**, daß die Grenzwerte veränderlich und einstellbar sind.

**Claims**

1. A viscous material pump with at least one delivery cylinder, one displacement piston, one hydraulic displacement piston drive for the provision of motive energy during an operational cycle consisting of delivery and induction strokes, and valves which connect the delivery cylinder to an outlet during the delivery stroke and to an inlet during the induction stroke, together with a monitoring device for monitoring the action of the pump, characterised by continuous error monitoring and indication display not only by means of the use of indicators of the hydrostatic pump-drive but also of indicators of the filling level and through-flow quantities calculated from measured pressure-, time- and travel-parameters of the viscous material pumping cylinder at the moment of opening of the viscous material outlet valve, whereby the switching functions of the hydrostatic drive are compared with the function of the piston actions in the viscous material delivery cylinders, with any errors as a result of deviations being both ascertained and indicated.

2. A viscous material pump according to claim 1, characterised in that the intervals are measured that elapse from the start of the delivery stroke up until an out-flow signal that indicates the moment at which the viscous material begins to flow out of the delivery cylinder into the pipeline circuit as well as from this point up until the end of the delivery stroke, whereby a computer is provided to calculate the volumes from these time signals.

3. A viscous material pump according to claim 1, characterised in that the position of the displacement piston within the delivery cylinder is established and, from the position of the displacement piston at the moment of occurrence of an out-flow signal, the volume is ascertained.

4. A viscous material pump according to claim 1 with a valve arrangement consisting of an outlet disc valve that connects the delivery cylinder to the outlet as soon as the pressure in the delivery cylinder reaches the outlet pressure or exceeds it and to an inlet valve that opens at the start of the induction stroke, characterised in that an out-flow signal is produced as soon as the outlet valve opens and the outlet and inlet valves are controlled in such a way that both valves are closed at the reversal points of the piston movement.

5. A viscous material pump according to one of the claims 1 to 4, characterised in that, in the case of a two-cylinder viscous material pump, an out-flow signal is produced for each of the two delivery cylinders.

6. A viscous material pump according to one of the claims 1 to 5, characterised in that, in order to produce the out-flow signal, a measurement or the pressure of the hydraulic drive fluid and a measurement of the pressure of the viscous material takes place at the outlets and that an out-flow signal is produced whenever the hydraulic pressure and the pressure of the viscous material show a pre-selected ratio to each other.

7. A viscous material pump according to claims 1 to 3, characterised in that the through-flow quantity of the hydraulic drive fluid is registered and that the measurement of the volume of the viscous material is dependent upon this.

8. A viscous material pump according to claim 1, characterised in that a total volume is calculated from the delivery volumes measured during a plurality of delivery strokes.

9. A viscous material pump according to claim 8, characterised in that the time interval is measured during which a plurality of delivery strokes are performed and from this an average delivery quantity is defined as a function of the individual volumes and the time measured.

10. A viscous material pump according to claim 1, characterised in that the time is ascertained during which a delivery stroke is performed and from this and from the measured time a delivery quantity is defined.

11. A viscous material pump according to claim 1, characterised in that, serving as indicators of the hydrostatic pump-drive are the setting positions of the two throttle valves (X, Y), the switching positions of the hydrostatic pump-valve or slide-valve drives, as well as of the valve (56b) used for switching over the hydrostatic pump-drive as a function of time, and their comparison with the delivery piston actions of tne pump determines and indicates the deviations for error display.

12. A viscous material pump according to claim 11, characterised in that the hydraulic operating pressure within the hydrostatic pump-drive serves as an additional indicator with which at the same time the viscous material delivery pressure is measured and used as an error determinant of the pump valves.

13. A viscous material pump according to one of the claims 11 or 12, characterised in that at least some of the indicators of the hydrostatic pump-drive serve as a monitor and an error indication to itself.

14. A viscous material pump according to claim 13, characterised in that the correct width of aperture of the throttle valves is obtained from a time comparison of the opening and closing position of the pump-valves over the period of time, in such a way that the time interval between the opening and the switching over or closing of the pump-valve or valves is either more than or less than a threshold value (f).

**15.** A viscous material pump according to one of the claims 11 to 13, characterised in that, for the monitoring of the correct delivery cylinder fillings in the case of two-cylinder viscous material pumps, the volumetric efficiency levels of the two delivery cylinders, which in each case are determined from the quotient of the time interval (T13) between the opening of the pressure valve of the relevant delivery cylinder D (H) up until reaching the terminal position E (A) of the delivery piston and the sum obtained from this time interval and the time interval (T12) between the delivery cylinder reversal C (G) and the opening of the pressure valve D (H) if necessary following a compression stroke of the delivery piston, serve in such a way that differences between the two efficiency levels indicate different delivery cylinder fillings whilst any deviation from one half of the sum of both efficiency levels from a preselected threshold value indicates a fault in the approach flow of the viscous material.

**16.** A viscous material pump according to one of the claims 11 to 15, characterised in that, in order to monitor the hydrostatic drive, its own leakage oil quantities are used which are defined for the purpose of ascertaining and indicating any greater deviations of the theoretical delivery quantity, which is determined both by the amount of delivery piston strokes measured with the aid of the positioning (56b) of a pressure valve used for controlling the pump valve and also by the amount of cylinder stroke volume, from the actual delivery quantity of the hydraulic drive medium, which itself is determined from the positioning of the variable drive of the hydraulic pump of the hydrostatic drive.

**17.** A viscous material pump according to one of the claims 11 to 16, characterised in that the function of the pressure valves is monitored and indicated with the aid of pressure measurements in such a way that the actual delivery pressure of the viscous material multiplied by a threshold factor is less than the pre-selected delivery pressure of the viscous material pump.

**18.** A viscous material pump according to claims 16 and 17, characterised in that the indication display obtained by the monitoring of the pressure valve is suppressed as soon as a deviation of leakage oil quantity is indicated.

**19.** A viscous material pump according to one of the claims 11 to 18, characterised in that, in the case of two-cylinder piston pumps, any inadequate functioning of the hydrostatic drive is ascertained and indicated by means of a comparison of the time intervals of the two piston movements which are required by each of the pistons from the opening of the pressure valve up until reaching their terminal position within the delivery cylinder.

**20.** A viscous material pump according to one of the claims 11 to 19, characterised in that the defining of the forward terminal positions of the pressure valve drive cylinders and the control valve (56b) (I1, I2, I3) is effected with the aid of the approach-point switch located at the closed or terminal position.

**21.** A viscous material pump according to one of the claims 11 to 20, characterised in that the threshold values are variable and adjustable.

## Revendications

**1.** Pompe pour matières épaisses avec au moins un cylindre de refoulement, un piston déplaceur, une commande hydraulique du piston déplaceur pour l'alimentation en énergie cinétique pendant un cycle de fonctionnement se composant d'une élévation de refoulement et d'une élévation d'aspiration et des soupapes qui relient le cylindre de refoulement à un échappement lors de l'élévation de refoulement et à une admission lors de l'élévation d'aspiration, ainsi qu'un dispositif de surveillance pour contrôler le fonctionnement de la pompe, caractérisée par une surveillance et un affichage continus des erreurs avec utilisation aussi bien d'indicateurs de la commande hydrostatique de la pompe que d'indicateurs de degré de remplissage et de débit de passage calculés à partir de la mesure de paramètres de pression, de durée et de parcours du cylindre de la pompe pour matières épaisses au moment de l'ouverture de la soupape de décharge des matières épaisses, les fonctions logiques de la commande hydrostatique étant comparées à la fonction des courses alternatives du piston et des erreurs étant déterminées et affichées à partir d'anomalies.

**2.** Pompe pour matières épaisses selon la revendication 1, caractérisée par la mesure des laps de temps qui s'écoulent depuis le début de l'élévation de refoulement jusqu'à un signal d'évacuation qui redonne le moment auquel les matières épaisses commencent à s'écouler hors du cylindre de refoulement dans la conduite, ainsi que depuis celui-ci jusqu'à la fin de l'élévation de refoulement, un ordinateur qui calcule les volumes à partir de ces signaux de temps étant prévu.

**3.** Pompe pour matières épaisses selon la revendication 1, caractérisée en ce que la position du piston déplaceur dans le cylindre de refoulement est constatée et en ce que le volume est déterminé à partir de la position du piston déplaceur lors de l'apparition d'un signal d'évacuation.

4. Pompe pour matières épaisses selon la revendication 1, avec une disposition de soupape se composant d'une soupape de décharge à volet qui relie le cylindre de refoulement à l'échappement dès que la pression dans le cylindre de refoulement atteint la pression de décharge ou la dépasse, et avec une soupape d'admission qui s'ouvre au début de l'élévation d'aspiration, caractérisée en ce qu'un signal d'évacuation est produit dès que la soupape de décharge s'ouvre et en ce que les soupapes de décharge et d'admission sont commandées de façon à être toutes deux fermées aux points de renversement du mouvement du piston.

5. Pompe pour matières épaisses selon l'une des revendications 1 à 4, caractérisée en ce que, pour une pompe pour matières épaisses à deux cylindres, un signal d'évacuation est produit pour chacun des deux cylindres de refoulement.

6. Pompe pour matières épaisses selon l'une des revendications 1 à 5, caractérisée en ce que, pour produire le signal d'évacuation, un mesurage de la pression du liquide hydraulique de commande et un mesurage de la pression des matières épaisses est effectué aux échappements, et en ce qu'un signal d'évacuation est produit lorsque la pression hydraulique et la pression des matières épaises présentent un rapport donné l'une par rapport à l'autre.

7. Pompe pour matières épaisses selon les revendications 1 à 3, caractérisée en ce que le débit de passage du liquide hydraulique de commande est détecté et en ce que le mesurage du volume des matières épaisses est basé là-dessus.

8. Pompe pour matières épaisses selon la revendication 1, caractérisée en ce qu'un volume total est calculé à partir des volumes de refoulement calculés pendant la plupart des élévations de refoulement.

9. Pompe pour matières épaisses selon la revendication 8, caractérisée par le mesurage du laps de temps pendant lequel s'effectuent la plupart des élévations de refoulement et en ce qu'à partir de là, un refoulement moyen est déterminé en tant que fonction des volumes individuels et du temps mesuré.

10. Pompe pour matières épaisses selon la revendication 1, caractérisée en ce que le temps est déterminé pendant qu'une élévation de refoulement est effectuée et en ce qu'un refoulement est déterminé à partir de celle-ci et du temps mesuré.

11. Pompe pour matières épaisses selon la revendication 1, caractérisée en ce que les états de réglage des deux soupapes d'étranglement (X, Y), des états de commande des commandes hydrostatiques des soupapes ou des soupapes à tiroir de la pompe, ainsi que de la vanne (56b) servant à commuter la commande hydrostatique de la pompe, en tant que fonction de temps, servent d'indicateurs de la commande hydrostatique de la pompe et en ce que leur comparaison avec les courses alternatives du piston de refoulement de la pompe détermine et affiche les anomalies pour l'affichage des erreurs.

12. Pompe pour matières épaisses selon la revendication 11, caractérisée en ce que la pression hydraulique de service dans la commande hydrostatique de la pompe sert d'indicateur supplémentaire avec lequel est mesurée de façon isochronique la pression de refoulement des matières épaisses et sert à déterminer les erreurs des soupapes de la pompe.

13. Pompe pour matières épaisses selon l'une des revendications 11 ou 12, caractérisée en ce qu'au moins quelques-uns des indicateurs de la commande hydrostatique de la pompe servent à l'autocontrôle de cette commande et à l'affichage des erreurs.

14. Pompe pour matières épaisses selon la revendication 13, caractérisée en ce que l'amplitude exacte d'ouverture des soupapes d'étranglement résulte d'une comparaison de la durée de la position d'ouverture et de fermeture des soupapes de la pompe dans le temps de façon à ce que l'intervalle de temps entre l'ouverture et la commutation ou la fermeture de la ou des soupapes de la pompe dépasse ou soit inférieur à une valeur limite (f).

15. Pompe pour matières épaisses selon l'une des revendications 11 à 13, caractérisée en ce que, pour la surveillance des remplissages exacts des cylindres de refoulement pour des pompes pour matières épaisses à deux cylindres, les rendements volumétriques des deux cylindres de refoulement, rendements qui sont déterminés à chaque fois à partir du quotient de l'intervalle de temps (T 13) entre l'ouverture de la soupape de refoulement du cylindre de refoulement concerné D (H) jusqu'à l'obtention de la position terminale E (A) du piston de refoulement et la somme de cet intervalle de temps et de l'intervalle de temps (T 12) entre le renversement du piston de refoulement C (G) et l'ouverture de la soupape de refoulement D (H), le cas échéant, d'après une élévation de compression du piston de refoulement, servent à ce que des différences entre les deux rendements indiquent des remplissages différents des cylindres de refoulement tandis que l'écart de la moitié de la somme des deux rendements par rapport à une valeur limite donnée indique une perturbation dans l'amenée des matières épaisses.

16. Pompe pour matières épaisses selon l'une des revendications 11 à 15, caractérisée en ce que les à débits d'huile de fuite de la commande hydrostatique de la pompe servent à la surveillance de celle-ci, débits d'huile de fuite qui sont déterminés de façon à ce que des écarts par rapport au débit théorique de refoulement qui est déterminé à partir du nombre de courses du piston de refoulement mesurées à l'aide de la position (56b) d'une soupape de refoulement servant pour la commande de la soupape de la pompe soient déterminés et affichés à partir du débit de refoulement effectif du milieu hydraulique de commande, débit qui résulte de la position de la commande de réglage de la pompe hydraulique de la commande hydrostatique.

17. Pompe pour matières épaisses selon l'une des revendications 11 à 16, caractérisée en ce que la fonction des soupapes de refoulement est surveillée et affichée à l'aide de mesurages de pression de façon à ce que la pression effective de refoulement des matières épaisses, pression multipliée par un facteur limite, soit inférieure à la pression de refoulement donnée de la pompe pour matières épaisses.

18. Pompe pour matières épaisses selon les revendications 16 et 17, caractérisée en ce que l'affichage du contrôle des soupapes de refoulement est supprimé dès qu'une anomalie du débit d'huile de fuite est affiché.

19. Pompe pour matières épaisses selon l'une des revendications 11 à 18, caractérisée en ce qu'une fonction insuffisante de la commande hydrostatique est déterminée et affichée, pour des pompes à piston à deux cylindres, par comparaison des laps de temps des deux mouvements du piston nécessités par chaque piston depuis l'ouverture de la soupape de refoulement jusqu'à l'obtention de sa position terminale dans le cylindre de refoulement.

20. Pompe pour matières épaisses selon l'une des revendications 11 à 19, caractérisée en ce que la détermination des positions terminales avant des cylindres de commande des soupapes de refoulement et de la vanne-pilote (56b) (I1, I2, I3) s'effectue à l'aide de déclencheurs de proximité affectés à la position fermée ou à la position terminale.

21. Pompe pour matières épaisses selon l'une des revendications 11 à 20, caractérisée en ce que les valeurs limite sont modifiables et réglables.

FIG.1

FIG.2

# FIG. 3

EP 0 562 398 B1

# FIG.4

EINGABEVOR-
RICHTUNG

157

UHR — 154

158

TELLER-
VENTIL-
SENSOREN

152

150

COMPUTER

AUSGABE-
VORRICHTUNG

156

160

SCHWENKWINKEL-
SENSOREN
(HYDR. PUMPE)

HYDRAULIK-
SYSTEM-
SENSOREN

162

10

PUMPE

EP 0 562 398 B1

# FIG.5

UHR — 204

200

210

DRUCKTELLER-
VENTIL
SENSOREN

KOLBEN-
STELLUNGS-
SENSOREN — 212

202

COMPUTER

EINGABE
VORRICHTUNG — 206

AUSGABE-
VORRICHTUNG

208

PUMPE — 10

EP 0 562 398 B1

# FIG.6

EP 0 562 398 B1

# FIG.7

EINGABE VORRICHTUNG 306

301 UHR

HYDRAULIKDRUCK SENSOREN 310

AUSLASSDRUCK - SENSOREN 312

COMPUTER 302

300

AUSGABE VORRICHTUNG 308

KOLBENSTELLUNGS-SENSOR 314

PUMPE 100

EP 0 562 398 B1

FIG.8

EP 0 562 398 B1

# FIG.9

27

FIG.10

FIG.11

FIG.12